(19)

Europäisches
Patentamt

European
Patent Office

Office européen
des brevets

(11) **EP 4 475 455 A1**

(12) **EUROPEAN PATENT APPLICATION**
published in accordance with Art. 153(4) EPC

(43) Date of publication:
**11.12.2024   Bulletin 2024/50**

(21) Application number: **23767154.0**

(22) Date of filing: **08.03.2023**

(51) International Patent Classification (IPC):
*H04B 7/155* (2006.01)      *H04B 7/06* (2006.01)
*H04B 7/08* (2006.01)      *H04L 5/00* (2006.01)

(52) Cooperative Patent Classification (CPC):
**H04B 7/06; H04B 7/08; H04B 7/155; H04L 5/00**

(86) International application number:
**PCT/KR2023/003148**

(87) International publication number:
**WO 2023/172053 (14.09.2023 Gazette 2023/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:   **08.03.2022   KR 20220029621
15.06.2022   KR 20220072984**

(71) Applicant: **Samsung Electronics Co., Ltd
Suwon-si, Gyeonggi-do 16677 (KR)**

(72) Inventors:
• **LEE, Kyunggyu
Suwon-si, Gyeonggi-do 16677 (KR)**

• **JI, Hyoungju
Suwon-si, Gyeonggi-do 16677 (KR)**
• **CHOI, Kyungjun
Suwon-si, Gyeonggi-do 16677 (KR)**
• **LIM, Seongmok
Suwon-si, Gyeonggi-do 16677 (KR)**
• **LIM, Yeongeun
Suwon-si, Gyeonggi-do 16677 (KR)**
• **JANG, Youngrok
Suwon-si, Gyeonggi-do 16677 (KR)**

(74) Representative: **HGF
HGF Limited
1 City Walk
Leeds LS11 9DX (GB)**

(54) **METHOD AND DEVICE FOR CONFIGURING REPEATER BEAM IN WIRELESS
COMMUNICATION SYSTEM**

(57)    The present disclosure relates to a 5G or 6G
communication system for supporting higher data trans-
mission rates. Disclosed herein are a method and device
for configuring a beam for a repeater in a wireless com-
munication system. Specifically, a method performed by
a repeater in a wireless communication system com-
prises the steps of: receiving control information from a
base station, wherein the control information includes
information associated with a beam for a signal to be
transmitted from the repeater to a terminal; receiving the
signal from the base station; and transmitting the signal,
received from the base station, to the terminal on the
basis of the beam.

FIG. 15

**Description**

[Technical Field]

The disclosure relates to a wireless communication system, and more particularly, to a method and device for configuring a beam for repeater in a wireless communication system.

[Background Art]

5th generation (5G) mobile communication technologies define broad frequency bands such that high transmission rates and new services are possible, and can be implemented not only in "Sub 6 gigahertz (GHz)" bands such as 3.5 GHz, but also in "Above 6 GHz" bands referred to as millimeter wave (mmWave) including 28 GHz and 39 GHz. In addition, it has been considered to implement 6th generation (6G) mobile communication technologies (referred to as Beyond 5G systems) in terahertz (THz) bands (for example, 95 GHz to 3 THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced mobile broadband (eMBB), ultra-reliable low-latency communications (URLLC), and massive machine-type communications (mMTC), there has been ongoing standardization regarding beamforming and massive multiple input multiple output (MIMO) for mitigating radio-wave path loss and increasing radio-wave transmission distances in mmWave, supporting various numerologies (for example, operating multiple subcarrier spacings, etc.) for efficiently utilizing mmWave resources and dynamic operation of slot formats, initial access technologies for supporting multi-beam transmission and broadbands, definition and operation of bandwidth part (BWP), new channel coding methods such as a low density parity check (LDPC) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as vehicle-to-everything (V2X) for aiding driving determination by autonomous vehicles based on information regarding positions and states of vehicles transmitted by the vehicles and for enhancing user convenience, new radio unlicensed (NR-U) aimed at system operations conforming to various regulation-related requirements in unlicensed bands, new radio (NR) user equipment (UE) power saving, non-terrestrial network (NTN) which is UE-satellite direct communication for providing coverage in a region in which communication with terrestrial networks is unavailable, and positioning.

Moreover, there has been ongoing standardization in air interface architecture/protocol regarding technologies such as industrial internet of things (IIoT) for supporting new services through interworking and convergence with other industries, integrated access and backhaul (IAB) for providing a node for network service area expansion by supporting a wireless backhaul link and an access link in an integrated manner, mobility enhancement including conditional handover and dual active protocol stack (DAPS) handover, and two-step random access for simplifying random access procedures (2-step random access channel (RACH) for NR). There also has been ongoing standardization in system architecture/-service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI from the design stage and internalizing end-to-end AI support functions, and next-generation distributed computing technology for implementing services at levels of complexity exceeding the limit of UE operation capability by utilizing ultra-high-performance communication and computing resources.

[Disclosure]

[Technical Problem]

The disclosure provides a method for determining, by a base station, a beam that a repeater transmits and receive to and from a terminal in case where there is a repeater between the base station and the terminal in a wireless communication system, and the repeater amplifies and transmits a signal or channel provided from the base station to the terminal.

[Technical Solution]

In order to solve the above problems, the disclosure may provide a method performed by a repeater in a wireless communication system comprising receiving control information from a base station, wherein the control information includes information associated with a beam for a signal to be transmitted from the repeater to a terminal, receiving a signal from the base station, and transmitting the signal, received from the base station, to the terminal based on the beam.

In addition, a method performed by a base station in a wireless communication system according to an embodiment of the disclosure may comprise transmitting control information to a repeater, wherein the control information includes information associated with a beam for a signal to be transmitted from the repeater to a terminal, transmitting a signal to the repeater, wherein the signal, which has been transmitted to the repeater, may be delivered to the terminal through the repeater based on the beam.

In addition, a repeater in a wireless communication system according to an embodiment of the disclosure may comprise a receiver configured to receive control information from a base station and receive a signal from the base station, and a transmitter, wherein the control information may include information associated with a beam for a signal to be transmitted from the repeater to a terminal, and wherein the transmitter may be configured to transmit the signal, received from the base station, to the terminal based on the beam.

In addition, a base station in a wireless communication system according to an embodiment of the disclosure may comprise a controller, and a transceiver configured to transmit control information to a repeater and transmit a signal to the repeater, wherein the control information may include information associated with a beam for a signal to be transmitted from the repeater to a terminal, and the signal, which has been transmitted to the repeater, may be delivered to the terminal through the repeater on the basis of the beam.

[Advantageous Effects]

According to an embodiment of the disclosure, beamforming gain can be obtained in case where a repeater amplifies and transmits under the control of a base station in a wireless communication system.

[Description of Drawings]

FIG. 1 is a diagram illustrating a basic structure of a time-frequency domain resource of a wireless communication system according to an embodiment of the disclosure
FIG. 2 is a diagram illustrating a frame, subframe, and slot structure of a wireless communication system according to an embodiment of the disclosure
FIG. 3 illustrates an example of a bandwidth part (BWP) configuration in a wireless communication system according to an embodiment of the disclosure
FIG. 4 is a diagram illustrating an example of control region configuration in which a downlink control channel is transmitted in a wireless communication system according to an embodiment of the disclosure
FIG. 5 is a diagram illustrating a structure of a downlink control channel of a wireless communication system according to an embodiment of the disclosure.
FIG. 6 is a diagram illustrating an example of frequency domain resource allocation of a physical downlink shared channel (PDSCH) in a wireless communication system according to an embodiment of the disclosure
FIG. 7 is a diagram illustrating an example of time domain resource allocation of a PDSCH in a wireless communication system according to an embodiment of the disclosure
FIG. 8 is a diagram illustrating an example of time domain resource allocation according to a subcarrier spacing of a data channel and control channel in a wireless communication system according to an embodiment of the disclosure

FIG. 9 is a diagram illustrating a procedure for beam configuration and activation of a physical downlink control channel (PDCCH) according to an embodiment of the disclosure.

FIG. 10 is a diagram illustrating a process for beam configuration and activation of a PDSCH according to an embodiment of the disclosure.

FIG. 11 is a diagram illustrating an example of R-TCI state according to an embodiment of the disclosure.

FIG. 12 is a diagram illustrating an example of a base station indicating an R-TCI state to a network controlled repeater (NetRep) according to an embodiment of the disclosure.

FIG. 13 is a diagram illustrating an example of a base station indicating an R-TCI state pattern to a NetRep according to an embodiment of the disclosure.

FIG. 14 is a diagram illustrating an example of a base station indicating an R-TCI state pattern in case where two panels exist for NetRep according to an embodiment of the disclosure.

FIG. 15 illustrates a signaling procedure between a base station, a repeater, and a terminal according to an embodiment of the disclosure.

FIG. 16 is a diagram illustrating a structure of a terminal in a wireless communication system according to an embodiment of the disclosure

FIG. 17 is a diagram illustrating a structure of a base station in a wireless communication system according to an embodiment of the disclosure.

[Mode for Disclosure]

Hereinafter, embodiments of the disclosure will be described in detail with reference to the accompanying drawings.

In the following description of embodiments of the disclosure, descriptions of techniques that are well known in the art and not directly related to the disclosure are omitted. This is to clearly convey the gist of the disclosure by omitting any unnecessary explanation.

For the same reason, some elements in the drawings are exaggerated, omitted, or schematically illustrated. Also, actual sizes of respective elements are not necessarily represented in the drawings. In the drawings, the same or corresponding elements are denoted by the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference numerals designate the same or like elements.

Herein, it will be understood that each block of the flowchart illustrations, and combinations of blocks in the flowchart illustrations, can be implemented by computer program instructions. These computer program instructions can be provided to a processor of a general purpose computer, special purpose computer, or other programmable data processing apparatus, such that the instructions, which execute via the processor of the computer or other programmable data processing apparatus, create means for implementing the functions specified in the flowchart block(s). These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block(s). The computer program instructions may also be loaded onto a computer or other programmable data processing apparatus to cause a series of operational steps to be performed on the computer or other programmable data processing apparatus to produce a computer implemented process such that the instructions that execute on the computer or other programmable data processing apparatus provide steps for implementing the functions specified in the flowchart block(s).

Further, each block of the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used herein, the "unit" refers to a software element or a hardware element, such as a Field Programmable Gate Array (FPGA) or an Application Specific Integrated Circuit (ASIC), which performs a predetermined function. However, the "unit" does not always have a meaning limited to software or hardware. The "unit" may be constructed either to be stored in an addressable storage medium or to execute one or more processors. Therefore, the "unit" includes, for example, elements such as software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements and a "unit", or divided into a larger number of elements and a "unit". Moreover, the elements and "units" or may be implemented to reproduce one or more central processing units (CPUs) within a device or a security multimedia card. Further, the "unit" in the embodiments may include one or more processors.

Hereinafter, the operation principle of the disclosure will be described in detail with reference to the accompanying drawings. In describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the operators, or customs. Therefore, the definitions of the terms should be made based on the contents throughout the specification.

Hereinafter, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing communication functions. It is apparent that examples of the base station and the terminal are not limited thereto.

The following description of the disclosure is directed to technology for receiving broadcast information from a base station by a terminal in a wireless communication system. The disclosure relates to a communication technique for converging Internet of Things (IoT) technology with a 5th generation (5G) communication system designed to support a higher data transfer rate beyond the 4th generation (4G) system, and a system therefor. The disclosure may be applied to intelligent services (e.g., smart homes, smart buildings, smart cities, smart cars or connected cars, healthcare, digital education, retail business, security and safety-related services, etc.) on the basis of 5G communication technology and IoT-related technology.

In the following description, terms with reference to broadcast information, terms with reference to control information, terms related to communication coverage, terms with reference to state changes (e.g., events), terms with reference to network entities, terms with reference to messages, terms with reference to device elements, and the like are illustratively used for the sake of convenience. Therefore, the disclosure is not limited by the terms as used below, and other terms with reference to subjects having equivalent technical meanings may be used.

In the following description, some of terms and names defined in the 3rd generation partnership project long term evolution (3GPPLTE) standards may be used for the convenience of description. However, the disclosure is not limited by these terms and names, and may be applied in the same way to systems that conform other standards.

Wireless communication systems have been developed from wireless communication systems providing voice centered services to broadband wireless communication systems providing high-speed, high-quality packet data services, such as communication standards of high speed packet access (HSPA), long-term evolution (LTE or evolved universal terrestrial radio access (E-UTRA)), LTE-advanced (LTE-A), and LTE-Pro of the 3 GPP, high rate packet data (HRPD) and ultra-mobile broadband (UMB) of 3GPP2, 802.16e of IEEE, and the like.

An LTE system that is a representative example of the broadband wireless communication system has adopted an orthogonal frequency division multiplexing (OFDM) scheme in a downlink (DL) and has adopted a single carrier frequency division multiple access (SC-FDMA) scheme in an uplink (UL). The UL refers to a wireless link through which a terminal (UE or MS) transmits data or a control signal to a base station (BS or eNodeB), and the DL refers to a wireless link through which a base station transmits data or a control signal to a terminal. The multiple access scheme normally allocates and operates time-frequency resources for transmission of data or control information according to each user so as to prevent the time-frequency resources from overlapping with each other, that is, to establish orthogonality, thereby distinguishing the data or control information of each user.

As a future communication system after LTE, that is, a 5G communication system has to be able to freely reflect various requirements of a user, service provider, etc., and thus services satisfying various requirements need to be supported. The services considered for the 5G communication system include enhanced mobile broadband (eMBB), massive machine-type communication (mMTC), ultra-reliability low latency communication (URLLC), and the like.

According to some embodiments, eMBB aims to provide a higher data transmission rate than a data transmission rate supported by the LTE, LTE-A, or LTE-Pro. For example, in the 5G communication system, eMBB should be able to provide a peak data rate of 20 Gbps in the DL and a peak data rate of 10 Gbps in the UL from the viewpoint of one base station. At the same time, the 5G communication system should provide the increased user perceived data rate of the terminal. In order to satisfy such requirements, improvement of various transmitting/receiving technologies including a further improved multiple input multiple output (MIMO) transmission technology is needed. In addition, the 5G communication system uses a bandwidth wider than 20 megahertz (MHz) in a frequency band of 3 to 6 GHz or more than 6 GHz, instead of a 2 GHz band used by the current LTE, thereby satisfying a data transmission rate required in the 5G communication system.

Simultaneously, mMTC is being considered to support application services such as Internet of Thing (IoT) in the 5G communication system. mMTC is required for an access support of a large-scale terminal in a cell, coverage enhancement of a terminal, improved battery time, and cost reduction of a terminal in order to efficiently provide the IoT. The IoT needs to be able to support a large number of terminals (e.g., 1,000,000 terminals/km$^2$) in a cell because it is attached to various sensors and devices to provide communication functions. In addition, because the terminals supporting mMTC are more likely to be positioned in shaded regions not covered by a cell, such as a basement of a building due to nature of services, the terminals may require a wider coverage than other services provided by the 5G communication system. The terminals supporting mMTC should be configured as inexpensive terminals and require very long battery life-time because it is difficult to frequently replace batteries of the terminals.

Finally, URLLC is a cellular-based wireless communication service used for mission-critical purposes, and the URLLC may consider a service used in remote control for robots or machinery, industrial automation, unmanned aerial vehicles, remote health care, emergency alerts, and the like. Accordingly, the URLLC should provide very low latency and very high reliability. For example, URLLC-supportive services need to meet an air interface latency of less than 0.5 milliseconds and simultaneously include requirements of a packet error rate of $10^{-5}$ or less. Accordingly, for URLLC-supportive services, the 5G system should provide a transmit time interval (TTI) shorter than those for other services while securing design requirements for allocating a broad resource in a frequency band. However, the aforementioned mMTC, URLLC, and eMBB are only examples of different service types, and the service types to which the disclosure is applied are not limited to the above-described examples.

The above-discussed services considered in the 5G communication system should be converged with each other and provided, based on a single framework. That is, for an effective resource management and control, it is desirable that such services are controlled and transmitted by being integrated into one system rather than being operated independently.

In addition, although an embodiment of the disclosure will be described below using an LTE, LTE-A, LTE Pro, or NR system as an example, the embodiment of the disclosure may be applied to other communication systems having similar technical backgrounds or channel types. In addition, an embodiments of the disclosure may be applied to other communication systems through some modifications within a range which does not significantly depart from the scope of the disclosure, as determined by a person having skilled technical knowledge.

<5G System frame structure>

Hereinafter, the frame structure of a 5G system will be described in more detail with reference to the drawings.

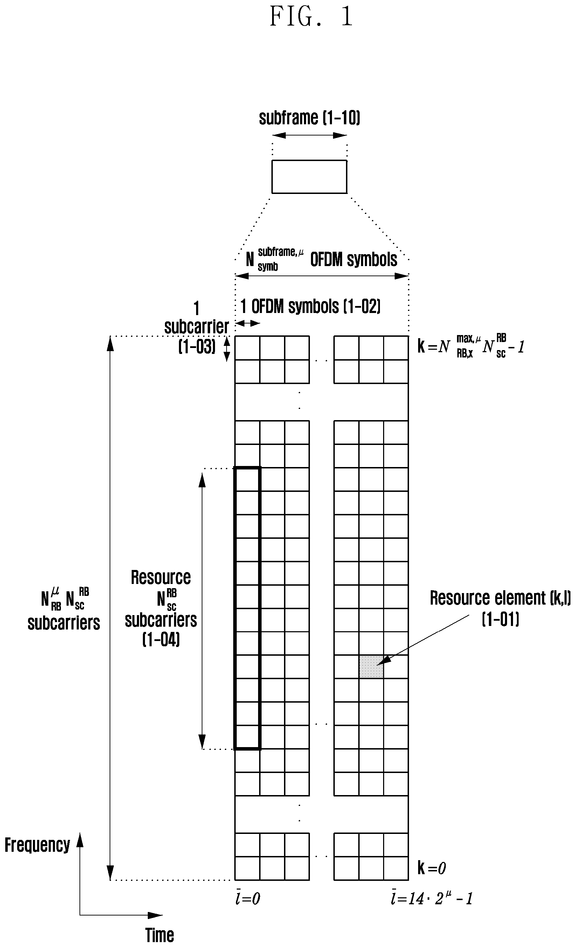

FIG. 1 is a diagram illustrating the basic structure of a time-frequency resource of a wireless communication system according to an embodiment of the disclosure.

With reference to FIG. 1, the horizontal axis represents a time domain, and the vertical axis represents a frequency domain. A basic unit of resources in the time-frequency domain may be a resource element (RE) 1-01. The resource element 1-01 may be defined by 1 OFDM symbol 1-02 in time domain and 1 subcarrier 1-03 in frequency domain. In the frequency domain, $N_{sc}^{RB}$ (for example, 12) consecutive Res may constitute one resource block (RB) 1-04. In an embodiment, a plurality of OFDM symbols may constitute one subframe 1-10.

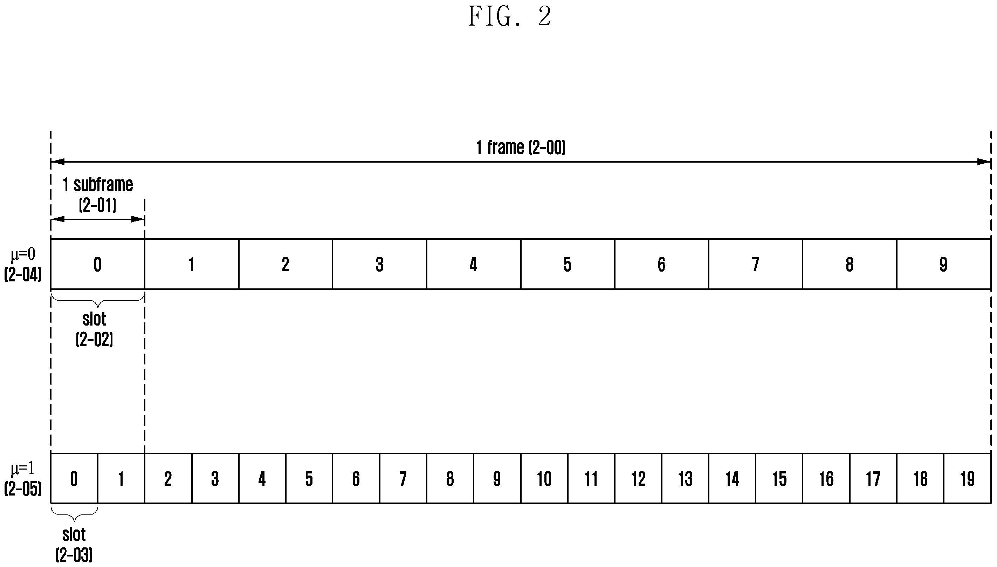

FIG. 2 is a diagram illustrating a frame, a subframe, and a slot structure in a wireless communication system according to an embodiment of the disclosure.

With reference to FIG. 2, one frame 2-00 may include one or more subframes 2-01, and one subframe may include one or more slots 2-02. For example, 1 frame 2-00 may be defined as 10 millisecond (ms). 1 subframe 2-01 may be defined as 1 ms, and here 1 frame 2-00 may include a total of 10 subframes 2-01. 1 slot 2-02 or 2-03 may be defined as 14 OFDM symbols (i.e., the number of symbols per slot $(N_{symb}^{slot})=14$). 1 subframe 2-01 may include one or multiple slots 2-02 and 2-03, and the number of slots 2-02 and 2-03 per 1 subframe 2-01 may differ according to configuration value μ 2-04 or 2-05 for a subcarrier spacing. In the example of FIG. 2, a case in which the subcarrier spacing configuration value is μ=0 (2-04) and μ=1 (2-05) is illustrated. In a case of μ=0 (2-04), 1 subframe 2-01 may include 1 slot 2-02, and in a case of μ=1 (2-05), 1 subframe 2-01 may include two slots 2-03. That is, the number of slots per subframe ( $N_{slot}^{subframe,\mu}$ ) may differ according to a subcarrier spacing configuration value μ, and accordingly, the number of slots per frame ( $N_{slot}^{frame,\mu}$ ) may differ. According to each subcarrier spacing configuration $N_{slot}^{subframe,\mu}$ and $N_{slot}^{frame,\mu}$ may be defined in Table 1 below.

[Table 1]

| $\mu$ | $N_{\text{symb}}^{\text{slot}}$ | $N_{\text{slot}}^{\text{frame},\mu}$ | $N_{\text{slot}}^{\text{subframe},\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

In NR, one component carrier (CC) or serving cell may include up to 250 RBs or more. Therefore, in case that a UE always receives the entire serving cell bandwidth, such as in the LTE system, power consumption of the UE may be extreme, and in order to solve this problem, it is possible for a base station to configure one or more bandwidth parts (BWPs) for the UE so as to support the UE to change a reception region within a cell. In NR, the base station may configure an "initial BWP", which is a bandwidth of control resource set (CORESET) #0 (or common search space (CSS)), for the UE via a master information block (MIB). Thereafter, the base station may configure an initial BWP (first BWP) of the UE via radio resource control (RRC) signaling, and may notify of at least one BWP configuration information that can be indicated through downlink control information (DCI) in the future. Thereafter, the base station may notify of a BWP ID via DCI so as to indicate which band the UE is to use. In case that the UE fails to receive DCI in a currently allocated BWP for a specific period of time or more, the UE returns to a "default BWP" and attempts to receive DCI.

<5G bandwidth part(BWP)>

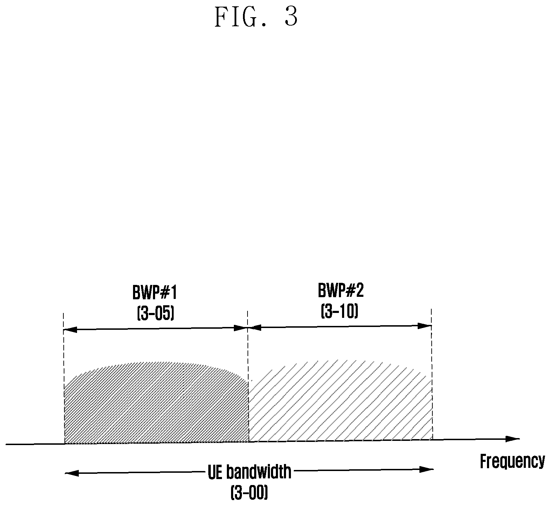

FIG. 3 is a diagram illustrating an example of a bandwidth part (BWP) configuration in a wireless communication system according to an embodiment of the disclosure.

With reference to FIG. 3, FIG. 3 illustrates an example in which a UE bandwidth 3-00 is configured by two BWPs, that is, BWP #1 3-05 and BWP #2 3-10. The base station may configure one or multiple BWPs for the UE, and may configure pieces of information as shown in Table 2 below for each bandwidth part.

【Table 2】

| BWP ::= | SEQUENCE { |
|---|---|

```
        bwp-Id                                    BWP-Id,

            (bandwidth part identifier)

        locationAndBandwidth            INTEGER (1..65536),

        (bandwidth part location)

        subcarrierSpacing                   ENUMERATED {n0, n1, n2,
n3, n4, n5},

        (subcarrier spacing)

        cyclicPrefix                            ENUMERATED
{ extended }

        (cyclic prefix)

        }
```

An embodiment of the disclosure is not limited to the above example, and in addition to the configuration information, various parameters related to a BWP may be configured in the UE. The above-described pieces of information may be delivered by the base station to the UE via higher layer signaling, for example, RRC signaling. At least one BWP among the configured one or multiple BWPs may be activated. Whether to activate the configured BWP may be semi-statically delivered from the base station to the UE via RRC signaling or may be dynamically delivered through an MAC control element (CE) or DCI.

According to an embodiment, a UE before RRC connection may be configured with an initial BWP for initial access from a base station through a MIB. More specifically, the UE may receive configuration information about a search apace and a control resource set (or CORESET) through which the physical downlink control channel (PDCCH) can be transmitted, in order to receive system information required for initial access (which may correspond to remaining system information (RMSI) or system information block 1 (SIB 1)) through the MIB in an initial access operation. Each of the control resource set (CORESET) and search space configured through the MIB may be regarded as identity (ID) 0.

The base station may notify the UE of configuration information, such as frequency allocation information, time allocation information, and numerology for the control resource set #0 through the MIB. In addition, the base station may notify the UE of configuration information regarding the monitoring periodicity and occasion for the control resource set #0, that is, configuration information regarding the search space #0, through the MIB. The UE may regard the frequency domain configured as the control resource set #0, obtained from the MIB, as an initial BWP for initial access. Here, the identity (ID) of the initial BWP may be regarded as zero.

The configuration of the BWP supported by the above-described next-generation mobile communication system (5G or NR system) may be used for various purposes.

As an example, in case that a bandwidth supported by the UE is smaller than a system bandwidth, the bandwidth supported by the UE may be supported through the BWP configuration. For example, in Table 2, a frequency location (configuration information 2) of the BWP is configured for the UE and thus the UE may transmit or receive data at a specific frequency location within the system bandwidth.

According to another example, the base station may configure multiple BWPs in the UE for the purpose of supporting different numerologies. For example, in order to support both data transmission/reception to/from a predetermined UE by using a subcarrier spacing of 15 kilohertz (kHz) and a subcarrier spacing of 30 kHz, two BWPs may be configured to use a subcarrier spacing of 15 kHz and a subcarrier spacing of 30 kHz, respectively. Different BWPs may be frequency division multiplexed (FDMed), and in case of desiring to transmit or receive data at a specific subcarrier spacing, the BWP configured with the corresponding subcarrier spacing may be activated.

According to still another example, the base station may configure, in the UE, BWPs having bandwidths of different sizes for the purpose of reducing power consumption of the UE. For example, in case that the UE supports a very large bandwidth, for example, a bandwidth of 100 MHz, and always transmits or receives data through the corresponding bandwidth, very large power consumption may occur. In particular, in a situation in which there is no traffic, it is very inefficient, in terms of power consumption, for the UE to monitor an unnecessary downlink control channel for a large bandwidth of 100 MHz. Therefore, for the purpose of reducing power consumption of the UE, the base station may configure, for the UE, a bandwidth part of a relatively small bandwidth, for example, the bandwidth part of 20 MHz. In a situation in which there is no traffic, the UE may perform a monitoring operation in the bandwidth part of 20 MHz. In case that data has been generated, the UE may transmit or receive the data by using the bandwidth part of 100 MHz according to an indication of the base station.

In a method of configuring the bandwidth part, the UEs before the RRC connection may receive configuration information about the initial bandwidth part through the MIB in the initial access operation. More specifically, the UE may be configured with a control resource set (or CORESET) for a downlink control channel, through which DCI for scheduling a system information block (SIB) may be transmitted, from a MIB of a physical broadcast channel (PBCH). The bandwidth of the control resource set configured through the MIB may be regarded as the initial BWP. The UE may receive a physical downlink shared channel (PDSCH), through which the SIB is transmitted, through the configured initial BWP. The initial BWP may be used for other system information (OSI), paging, and random access in addition to the reception of the SIB.

<SSB/PBCH>

Hereinafter, a synchronization signal (SS)/PBCH block (SSB) of a next generation mobile communication system (5G or NR system) will be described.

The SS/PBCH block may refer to a physical layer channel block including a primary SS (PSS), a secondary SS (SSS), and a PBCH. More specifically, the SS/PBCH block may be defined as follows:

- PSS: It is a signal that serves as a reference for downlink time/frequency synchronization, and may provide some information of a cell ID.
- SSS: It serves as a reference for downlink time/frequency synchronization, and may provide the remaining cell ID information that is not provided by the PSS. In addition, the SSS may serve as a reference signal for demodulation of the PBCH.
- PBCH: It may provide essential system information required for transmission or reception of a data channel and control channel of a UE. The essential system information may include search space-related control information indicating radio resource mapping information of a control channel, scheduling control information for a separate data channel for transmission of system information, and the like.
- SS/PBCH block: The SS/PBCH block may include a combination of a PSS, an SSS, and a PBCH. One or plurality of SS/PBCH blocks may be transmitted within 5 ms, and each of the transmitted SS/PBCH blocks may be distinguished by indices.

The UE may detect the PSS and the SSS in the initial access operation, and may decode the PBCH. The UE may acquire the MIB from the PBCH, and may be configured with the control resource set #0 through the MIB. The UE may monitor the control resource set #0 under the assumption that the selected SS/PBCH block and a demodulation reference signal (DMRS) transmitted in the control resource set #0 are quasi-co-located (QCLed). The UE may receive system information through downlink control information transmitted from the control resource set #0. The UE may acquire, from the received system information, random access channel (RACH)-related configuration information required for initial access. The UE may transmit a physical RACH (PRACH) to the base station by considering the selected SS/PBCH index, and the base station having received the PRACH may acquire information about an SS/PBCH block index selected by the UE. The base station may know which block is selected, by the UE, among the SS/PBCH blocks, and may know that the UE has monitored the control resource set #0 corresponding to (or associated with) the selected SS/PBCH block.

<PDCCH: DCI>

Subsequently, downlink control information (hereinafter referred to as DCI) in a next generation mobile communication system (5G or NR system) is described in detail.

In the next generation mobile communication system (5G or NR system), scheduling information for uplink data (or a physical uplink shared channel (a PUSCH)) or downlink data (or a physical downlink shared channel (a PDSCH)) is delivered from the base station to the UE through DCI. The UE may monitor a fallback DCI format and non-fallback DCI format for the PUSCH or the PDSCH. The fallback DCI format may include a fixed field predefined between the base station and the UE, and the non-fallback DCI format may include a configurable field.

The DCI may be transmitted through a PDCCH, which is a physical downlink control channel, via a channel coding and modulation process. A cyclic redundancy check (CRC) may be added to a DCI message payload and may be scrambled by a radio network temporary identifier (RNTI) corresponding to the identity of the UE. Depending on the purpose of the DCI message, for example, UE-specific data transmission, a power control command, or a random access response, different RNTIs may be used for scrambling of the CRC added to the DCI message payload. That is, the RNTI is not explicitly transmitted but is included in a CRC calculation process to be transmitted. If the DCI message transmitted through the PDCCH is received, the UE may identify the CRC through the allocated RNTI. If the CRC identification result is correct, the UE may recognize that the corresponding message is transmitted to the UE.

For example, DCI for scheduling a PDSCH for system information (SI) may be scrambled by an SI-RNTI. DCI for scheduling a PDSCH for a random access response (RAR) message may be scrambled by a RA-RNTI. DCI for scheduling a PDSCH for a paging message may be scrambled by a P-RNTI. DCI for notifying of a slot format indicator (SFI) may be scrambled by an SFI-RNTI. DCI for notifying of transmit power control (TPC) may be scrambled with a TPC-RNTI. DCI for scheduling a UE-specific PDSCH or PUSCH may be scrambled by a cell RNTI (C-RNTI).

DCI format 0_0 may be used for fallback DCI for scheduling a PUSCH in which case the CRC may be scrambled by a C-RNTI. DCI format 0_0 in which the CRC is scrambled by the C-RNTI may include, for example, the following information shown below in Table 3.

[Table 3]

- Identifier for DCI formats - [1] bit

- Frequency domain resource assignment -[ $\left\lceil \log_2 (N_{\mathrm{RB}}^{\mathrm{UL,BWP}} (N_{\mathrm{RB}}^{\mathrm{UL,BWP}} + 1)/2) \right\rceil$ ] bits
- Time domain resource assignment - X bits
- Frequency hopping flag - 1 bit.
- Modulation and coding scheme - 5 bits
- New data indicator - 1 bit
- Redundancy version - 2 bits
- HARQ process number - 4 bits
- Transmit power control (TPC) command for scheduled PUSCH - [2] bits
- UL / supplementary UL (SUL) indicator - 0 or 1 bit

DCI format 0_1 may be used for non-fallback DCI for scheduling a PUSCH in which case the CRC may be scrambled by a C-RNTI. In an embodiment, DCI format 0_1 in which the CRC is scrambled by the C-RNTI may include, for example, the following information shown below in Table 4.

[Table 4]

- Carrier indicator - 0 or 3 bits
- UL/SUL indicator - 0 or 1 bit
- Identifier for DCI formats - [1] bits
- Bandwidth part indicator - 0, 1 or 2 bits
- Frequency domain resource assignment

For resource allocation type 0, $\left\lceil N_{\mathrm{RB}}^{\mathrm{UL,BWP}} / P \right\rceil$ bits

For resource allocation type 1, $\left\lceil \log_2 (N_{\mathrm{RB}}^{\mathrm{UL,BWP}} (N_{\mathrm{RB}}^{\mathrm{UL,BWP}} + 1)/2) \right\rceil$ bits

- Time domain resource assignment -1, 2, 3, or 4 bits
- Virtual resource block (VRB)-to-physical resource block (PRB) mapping - 0 or 1 bit, only for resource allocation type 1.

0 bit if only resource allocation type 0 is configured;
1 bit otherwise.
- Frequency hopping flag - 0 or 1 bit, only for resource allocation type 1.

0 bit if only resource allocation type 0 is configured;
1 bit otherwise.
- Modulation and coding scheme - 5 bits

(continued)

- New data indicator - 1 bit
- Redundancy version - 2 bits
- HARQ process number - 4 bits
- 1st downlink assignment index - 1 or 2 bits

> 1 bit for semi-static HARQ-ACK codebook;
> 2 bits for dynamic HARQ-ACK codebook with single HARQ-ACK codebook.

- 2nd downlink assignment index - 0 or 2 bits

> 2 bits for dynamic HARQ-ACK codebook with two HARQ-ACK sub-codebooks;
> 0 bit otherwise.

- TPC command for scheduled PUSCH - 2 bits

- SRS resource indicator $\left\lceil \log_2\left( \sum_{k=1}^{L_{max}} \binom{N_{SRS}}{k} \right) \right\rceil$ or $\left\lceil \log_2\left( N_{SRS} \right) \right\rceil$ bits

> $\bullet \left\lceil \log_2\left( \sum_{k=1}^{L_{max}} \binom{N_{SRS}}{k} \right) \right\rceil$ bits for non-codebook based PUSCH transmission;
>
> $\bullet \left\lceil \log_2\left( N_{SRS} \right) \right\rceil$ bits for codebook based PUSCH transmission.

- Precoding information and number of layers -up to 6 bits
- Antenna ports - up to 5 bits
- SRS request - 2 bits
- Channel state information (CSI) request - 0, 1, 2, 3, 4, 5, or 6 bits
- Code block group (CBG) transmission information - 0, 2, 4, 6, or 8 bits
- Phase tracking reference signal (PTRS)-DMRS association - 0 or 2 bits.
- beta_offset indicator - 0 or 2 bits
- DMRS sequence initialization - 0 or
1 bit

DCI format 1_0 may be used for fallback DCI for scheduling a PDSCH in which case the CRC may be scrambled by a C-RNTI. In an embodiment, DCI format 1_0 in which the CRC is scrambled by the C-RNTI may include, for example, the following information shown below in Table 5.

[Table 5]

- Identifier for DCI formats - [1] bit
- Frequency domain resource assignment -[ $\left\lceil \log_2\left( N_{RB}^{DL,BWP} \left( N_{RB}^{DL,BWP} + 1 \right) / 2 \right) \right\rceil$ ] bits
- Time domain resource assignment - X bits
- VRB-to-PRB mapping - 1 bit.
- Modulation and coding scheme - 5 bits
- New data indicator - 1 bit
- Redundancy version - 2 bits
- HARQ process number - 4 bits
- Downlink assignment index - 2 bits
- TPC command for scheduled PUCCH - [2] bits
- Physical uplink control channel (PUCCH) resource indicator - 3 bits
- PDSCH-to-HARQ feedback timing indicator - [3] bits

Alternatively, DCI format 1_0 may be used as DCI for scheduling a PDSCH for a RAR message in which case the CRC may be scrambled by a RA-RNTI. DCI format 1_0 in which the CRC is scrambled by the C-RNTI may include, for example, the following information shown below in Table 6.

[Table 6]

- Frequency domain resource assignment -[ $\left\lceil \log_2 (N_{\mathrm{RB}}^{\mathrm{DL,BWP}} (N_{\mathrm{RB}}^{\mathrm{DL,BWP}} + 1)/2) \right\rceil$ ] bits
- Time domain resource assignment - 4 bits
- VRB-to-PRB mapping - 1 bit.
- Modulation and coding scheme - 5 bits
- TB scaling - 2 bit
- Reserved bits - 16 bits

DCI format 1_1 may be used for non-fallback DCI for scheduling a PDSCH in which case the CRC may be scrambled by a C-RNTI. In an embodiment, DCI format 1_1 in which the CRC is scrambled by the C-RNTI may include, for example, the following information shown below in Table 7.

[Table 7]

- Carrier indicator - 0 or 3 bits
- Identifier for DCI formats - [1] bits
- Bandwidth part indicator - 0, 1 or 2 bits
- Frequency domain resource assignment

For resource allocation type 0, $\left\lceil N_{\mathrm{RB}}^{\mathrm{DL,BWP}} / P \right\rceil$ bits
For resource allocation type 1,

$$\left\lceil \log_2 (N_{\mathrm{RB}}^{\mathrm{DL,BWP}} (N_{\mathrm{RB}}^{\mathrm{DL,BWP}} + 1)/2) \right\rceil \text{ bits}$$

- Time domain resource assignment -1, 2, 3, or 4 bits
- VRB-to-PRB mapping - 0 or 1 bit, only for resource allocation type 1.
0 bit if only resource allocation type 0 is configured;
1 bit otherwise.
- PRB bundling size indicator - 0 or 1 bit
- Rate matching indicator - 0, 1, or 2 bits
- Zero power (ZP) CSI-reference signal (RS) trigger -
0, 1, or 2 bits
For transport block 1:
- Modulation and coding scheme - 5 bits
- New data indicator - 1 bit
- Redundancy version - 2 bits
For transport block 2:
- Modulation and coding scheme - 5 bits
- New data indicator - 1 bit
- Redundancy version - 2 bits
- HARQ process number - 4 bits
- Downlink assignment index - 0 or 2 or 4 bits
- TPC command for scheduled PUCCH - 2 bits
- PUCCH resource indicator - 3 bits
- PDSCH-to-HARQ_feedback timing indicator - 3 bits
- Antenna ports - 4, 5 or 6 bits
- Transmission configuration indication - 0 or 3 bits
- SRS request - 2 bits

(continued)

| |
|---|
| - Code block group (CBG) transmission information - 0, 2, 4, 6, or 8 bits<br>- CBG flushing out information - 0 or 1 bit<br>- DMRS sequence initialization - 1 bit |

<QCL, TCI(transmission configuration indicator) state>

In the wireless communication system, one or more different antenna ports (alternatively, it may be replaced with one or more channels, signals, and combinations thereof, but in future descriptions of the disclosure, they are collectively referred to as different antenna ports for convenience of description) may be associated by a QCL configuration shown in Table 10, below. The TCI state is to inform of a QCL relation between a PDCCH (or a PDCCH DMRS) and another RS or channel, and a reference antenna port A (e.g., reference RS #A) and another purpose antenna port B (e.g., target RS #B) which are QCLed means that the UE is allowed to apply some or all of large-scale channel parameters estimated in the antenna port A to channel measurement from the antenna port B. The QCL is required to associate different parameters according to conditions, such as 1) time tracking influenced by average delay and delay spread, 2) frequency tracking influenced by Doppler shift and Doppler spread, 3) radio resource management (RRM) influenced by an average gain, and 4) beam management (BM) influenced by a spatial parameter. Accordingly, NR supports four types of QCL relations shown in Table 8, below.

[Table 8]

| QCL type | Large-scale characteristics |
|---|---|
| A | Doppler shift, Doppler spread, average delay, and delay spread |
| B | Doppler shift and Doppler spread |
| C | Doppler shift and average delay |
| D | Spatial Rx parameter |

The above spatial Rx parameter may collectively refer to some or all of various parameters such as an angle of arrival (AoA), a power angular spectrum (PAS) of AoA, an angle of departure (AoD), a PAS of AoD, a transmission/reception channel correlation, transmission/reception beamforming, and a spatial channel correlation.

The QCL relation may be configured in the UE through RRC parameter TCI-state and QCL-Info as shown in Table 9, below. With reference to Table 9, the base station may configure one or more TCI states in the UE and inform the UE of a maximum of two QCL relations (QCL-Type 1 and QCL-Type 2) for an RS with reference to an ID of the TCI state, that is, a target RS. In this case, each piece of the QCL information (QCL-Info) included in the TCI state includes a serving cell index and BWP index of a reference RS indicated by the corresponding QCL information, a type and an ID of the reference RS, and the QCL type as shown in Table 8, above.

【Table 9】

```
TCI-State ::=                                    SEQUENCE {

    tci-StateId                                      TCI-StateId,

    (ID of corresponding TCI state)

    qcl-Type1                                        QCL-Info,

    (QCL information of first reference RS of RS (target RS) referring to corresponding TCI
state ID)

    qcl-Type2                                        QCL-Info
                        OPTIONAL,    -- Need R

    (QCL information of second reference RS of RS (target RS) referring to corresponding
TCI state ID)

    ...
```

```
}


QCL-Info ::=                                        SEQUENCE {

    cell                                                    ServCellIndex
OPTIONAL,      -- Need R

    (serving cell index of reference RS indicated by corresponding QCL information)

    bwp-Id                                                  BWP-Id
                        OPTIONAL, -- Cond CSI-RS-Indicated

    (BWP index of reference RS indicated by corresponding QCL information)

    referenceSignal                         CHOICE {

        csi-rs                                              NZP-CSI-
RS-ResourceId,

        ssb
SSB-Index

        (one of CSI-RSI ID or SSB ID indicated by corresponding QCL information)

    },

    qcl-Type                                                ENUMERATED
{typeA, typeB, typeC, typeD},

    ...

}
```

< Related to PDCCH, PDSCH QCL rule>

In the following, the QCL priority determination operation for the PDCCH will be described in detail.

The UE may select a specific control resource set according to the QCL priority determination operation and monitor control resource sets having the same QCL-TypeD characteristics as the corresponding control resource set, in case that the UE operates with carrier aggregation within a single cell or band and a plurality of control resource sets existing within an activated bandwidth part within a single or plurality of cells have the same or different QCL-TypeD characteristics in a specific PDCCH monitoring interval and overlap each other in time. That is, when a plurality of control resource sets overlap in time, only one QCL-TypeD characteristic may be received. In this case, the criteria for determining the QCL priority may be as follows.

- Criteria 1. A control resource set connected to the common search space with the lowest index, within a cell corresponding to the lowest index among cells including the common search space.

- Criteria 2. A control resource set connected to the UE-specific search space with the lowest index, within a cell corresponding to the lowest index among cells including the UE-specific search space.

As described above, the next criterion is applied in case that each of the above criteria is not satisfied. For example, in case that control resource sets overlap in time in a specific PDCCH monitoring duration, if all control resource sets are not connected to a common search space but connected to a UE-specific search period, that is, if criteria 1 is not satisfied, the UE may omit the application of criteria 1 and apply criteria 2.

In case of selecting a control resource set based on the above criteria, the UE may additionally consider the following two items for QCL information configured to the control resource set. First, in case that control resource set 1 has CSI-RS 1 as a reference signal having a QCL-TypeD relationship, and a reference signal that this CSI-RS 1 has a QCL-TypeD relationship is SSB 1, and a reference signal that another control resource set 2 has a QCL-TypeD relationship is SSB 1, the UE may consider these two control resource sets 1 and 2 to have different QCL-TypeD characteristics. Second, in case that control resource set 1 has CSI-RS 1 configured in cell 1 as a reference signal having a QCL-TypeD relationship, and a reference signal that this CSI-RS 1 has a QCL-TypeD relationship is SSB 1, control resource set 2 has CSI-RS 2 configured in cell 2 as a reference signal having a QCL-TypeD relationship and a reference signal that this CSI-RS 2 has a QCL-TypeD relationship is SSB 1, the UE may consider the two control resource sets to have the same QCL-TypeD characteristics.

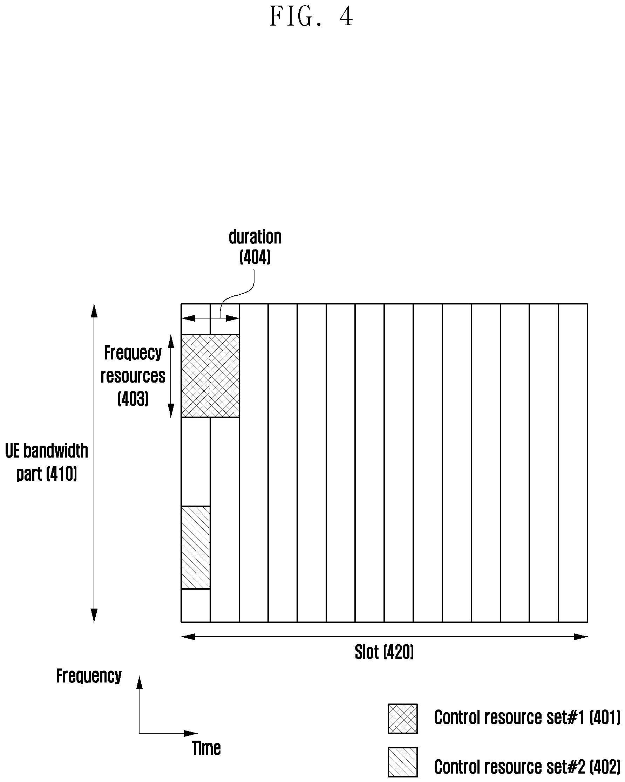

FIG. 4 is a diagram illustrating an example of a control resource set (CORESET) in which a downlink control channel is transmitted in a 5G wireless communication system.

With reference to FIG. 4, a UE bandwidth part 410 is configured in a frequency domain and two control resource sets (control resource set#1 401 and control resource set#2 402) are configured within one slot 420 in a time domain. The control resource sets 401 and 402 may be configured in a specific frequency resource 403 within the entire UE bandwidth part 410 in the frequency domain. In the time domain, one or a plurality of OFDM symbols may be configured, which may be defined as a control region length (control resource set duration 404). The control resource set#1 401 is configured with a control resource set duration having 2 symbols, and the control resource set #2 402 is configured with a control resource set duration having 1 symbol.

A base station may configure the above described control resource set in the 5G for a terminal through higher layer signaling (e.g., system information, an MIB or RRC signaling). To configure the control resource set for the terminal means that information, such as a control resource set identity, a frequency location of the control resource set, a symbol length of the control resource set, etc. are provided.

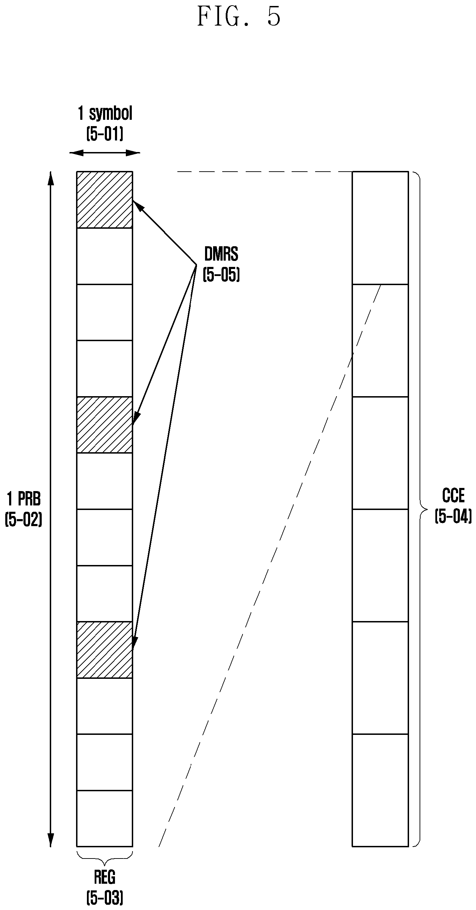

FIG. 5 is a diagram illustrating a structure of a downlink control channel in a wireless communication system according to an embodiment of the disclosure. That is, FIG. 5 is a diagram illustrating an example of a basic unit of time and frequency resources configuring a downlink control channel that may be used in 5G according to an embodiment of the disclosure.

With reference to FIG. 5, the basic unit of time and frequency resources configuring a control channel may be defined as a resource element group (REG) 5-03. The REG 5-03 may be defined by 1 OFDM symbol 5-01 in time domain and one physical resource block (PRB) 5-02, that is, 12 subcarriers, in frequency domain. The base station may concatenate the REG 5-03 to configure a downlink control channel allocation unit.

With reference to FIG. 5, in case that a basic unit to which a downlink control channel is allocated in 5G is referred to as a control channel element (CCE) 5-04, 1 CCE 5-04 may include a plurality of REGs 5-03. For example, when the REG 5-03 may include 12 REs and 1 CCE 5-04 includes 6 REGs 5-03, shown in FIG. 5, 1 CCE 5-04 may include 72 REs. When the downlink control resource set is configured, the corresponding region may include the plurality of CCEs 5-04. A specific downlink control channel may be transmitted after being mapped to one or plurality of CCEs 5-04 according to an aggregation level (AL) in the control resource set. The CCEs 5-04 in the control resource set are distinguished by numbers. Here, the numbers of the CCEs 5-04 may be assigned according to a logical mapping scheme.

The basic unit of the downlink control channel shown in FIG. 5, that is, the REG 5-03 may include both REs to which DCI is mapped and a region to which a DMRS 5-05 which is a reference signal for decoding the DCI is mapped. Three DMRSs 5-05 may be transmitted in 1 REG 5-03. The number of CCEs required for transmission of the PDCCH may be 1, 2, 4, 8, or 16 according to the aggregation level (AL). A different number of CCEs may be used to implement link adaptation of the downlink control channel. For example, in case that AL=L, one downlink control channel may be transmitted through L CCEs.

The UE needs to detect a signal in a state in which the UE does not know information about the downlink control channel, and a search space indicating a set of CCEs may be defined for blind decoding. The search space is a set of downlink control channel candidates including CCEs that the UE has to attempt to decode at a given aggregation level. Since there are various aggregation levels that make one bundle of 1, 2, 4, 8, or 16 CCEs, the UE may have a plurality of search spaces. A search space set may be defined as a set of search spaces at all configured aggregation levels.

The search space may be classified into a common search space and a UE-specific search space. According to an embodiment of the disclosure, a predetermined group of UEs or all the UEs may examine the common search space of the PDCCH in order to receive cell common control information, such as dynamic scheduling of system information or a paging message.

For example, the UE may receive PDSCH scheduling allocation information for transmission of the SIB including cell operator information and the like by examining the common search space of the PDCCH. In a case of the common search space, since a predetermined group of UEs or all the UEs need to receive the PDCCH, the common search space may be defined as a set of previously promised CCEs. On the other hand, the UE may receive scheduling allocation information about the UE-specific PDSCH or PUSCH by examining the UE-specific search space of the PDCCH. The UE-specific search space may be UE-specifically defined as a function of the UE identity and various system parameters.

In 5G, the parameter for the search space of the PDCCH may be configured for the UE from the base station via higher layer signaling (e.g., SIB, MIB, and RRC signaling). For example, the base station may configure, in the UE, the number of PDCCH candidates at each aggregation level L, the monitoring periodicity for the search space, monitoring occasion of symbol units in the slots for the search space, the search space type (common search space or UE-specific search space), a combination of RNTI and DCI format to be monitored in the corresponding search space, a control resource set index to monitor the search space, and the like. For example, the configuration information described above may include the following pieces of information of Table 10 below.

【Table 10】

| |
|---|
| SearchSpace ::=                                                                                                    SEQUENCE { |
|     -- Identity of the search space. SearchSpaceId = 0 identifies the SearchSpace configured via PBCH (MIB) or ServingCellConfigCommon. |
|     searchSpaceId                                                                                SearchSpaceId, |
|     (search space identifier) |
|     controlResourceSetId                                                                         ControlResourceSetId, |
|     (control resource set identifier) |
|     monitoringSlotPeriodicityAndOffset                            CHOICE { |
|     (monitoring slot level period) |
|         sl1 NULL, |
|         sl2 INTEGER (0..1), |
|         sl4 INTEGER (0..3), |
|         sl5 INTEGER (0..4), |
|         sl8 INTEGER (0..7), |
|         sl10 |

```
        INTEGER (0..9),

            sl16
        INTEGER (0..15),

            sl20
        INTEGER (0..19)

        }

                                                        OPTIONAL,

    duration (monitoring length)              INTEGER (2..2559)

        monitoringSymbolsWithinSlot                     BIT STRING (SIZE
(14))
            OPTIONAL,

(monitoring symbol within slot)

        nrofCandidates                          SEQUENCE {

(number of PDCCH candidates at each aggregation level)

            aggregationLevel1
        ENUMERATED {n0, n1, n2, n3, n4, n5, n6, n8},

            aggregationLevel2
        ENUMERATED {n0, n1, n2, n3, n4, n5, n6, n8},

            aggregationLevel4
        ENUMERATED {n0, n1, n2, n3, n4, n5, n6, n8},

            aggregationLevel8
        ENUMERATED {n0, n1, n2, n3, n4, n5, n6, n8},

            aggregationLevel16
        ENUMERATED {n0, n1, n2, n3, n4, n5, n6, n8}

        },
```

```
        searchSpaceType                                           CHOICE {

(search space type)

                -- Configures this search space as common search space (CSS) and DCI formats
to monitor.

                common
        SEQUENCE {

(common search space)

        }
                ue-Specific
        SEQUENCE {

(UE-specific search space)

                -- Indicates whether the UE monitors in this USS for DCI formats 0-0
and 1-0 or for formats 0-1 and 1-1.

                formats
        ENUMERATED {formats0-0-And-1-0, formats0-1-And-1-1},

                ...

        }
```

The base station may configure one or a plurality of search space sets for the UE based on configuration information. According to an embodiment of the disclosure, The base station may configure search space set 1 and search space set 2 in the UE, configure DCI format A scrambled by X-RNTI in the search space set 1 to be monitored in the common search space, and configure DCI format B scrambled by Y-RNTI in the search space set 2 to be monitored in a UE-specific search space.

According to the configuration information, one or a plurality of search space sets may exist in the common search space or UE-specific search space. For example, search space set #1 and search space set #2 may be configured as the common search space, and search space set #3 and search space set #4 may be configured as the UE-specific search space.

The common search space may be classified into a search space set of a specific type according to a purpose. An RNTI to be monitored may be different according to the determined type of search space set. For example, the common search space type, purpose, and RNTI to be monitored may be classified as Table 10a below.

[Table 10a]

| search space type | purpose | RNTI |
|---|---|---|
| Type0 CSS | PDCCH transmission for SIB schedule | SI-RNTI |
| Type0A CSS | PDCCH transmission for SI schedule (SIB2 etc.) other than SIB1 | SI-RNTI |
| Type1 CSS | PDCCH transmission for random access response (RAR) schedule, Msg3 retransmission schedule, and Msg4 schedule | RA-RNTI, TC-RNTI |
| Type2 CSS | paging | P-RNTI |
| Type3 CSS | group control information transmission | INT-RNTI, SFI-RNTI, TPC-PUSCH-RNTI, TPC-PUCCH-RNTI, TPC-SRS-RNTI |
| | For PCell, PDCCH transmission for data schedule | C-RNTI, MCS-C-RNTI, CS-RNTI |

Meanwhile, in the common search space, the following combinations of the DCI format and RNTI may be monitored. However, the disclosure is not limited thereto.

- DCI format 0_0/1_0 with CRC scrambled by C-RNTI, CS-RNTI, SP-CSI-RNTI, RA-RNTI, TC-RNTI, P-RNTI, SI-RNTI
- DCI format 2_0 with CRC scrambled by SFI-RNTI
- DCI format 2_1 with CRC scrambled by INT-RNTI
- DCI format 2_2 with CRC scrambled by TPC-PUSCH-RNTI, TPC-PUCCH-RNTI
- DCI format 2_3 with CRC scrambled by TPC-SRS-RNTI

In the UE-specific search space, the following combinations of the DCI format and RNTI may be monitored. However, the disclosure is not limited thereto.

- DCI format 0_0/1_0 with CRC scrambled by C-RNTI, CS-RNTI, TC-RNTI
- DCI format 1_0/1_1 with CRC scrambled by C-RNTI, CS-RNTI, TC-RNTI

The specified RNTIs may follow the definitions and usages described below.
Cell RNTI (C-RNTI): For UE-specific PDSCH scheduling
Temporary Cell RNTI (TC-RNTI): For UE-specific PDSCH scheduling
Configured Scheduling RNTI (CS-RNTI): For semi-statically configured UE-specific PDSCH scheduling
Random Access RNTI (RA-RNTI): For PDSCH scheduling in random access operation
Paging RNTI (P-RNTI): For scheduling of PDSCH through which paging is transmitted
System Information RNTI (SI-RNTI): For PDSCH scheduling in which system information is transmitted
Interruption RNTI (INT-RNTI): For notifying of whether to puncture PDSCH
Transmit Power Control for PUSCH RNTI (TPC-PUSCH-RNTI): For indication of power control command for PUSCH
Transmit Power Control for PUCCH RNTI (TPC-PUCCH-RNTI): For indication of power control command for PUCCH
Transmit Power Control for SRS RNTI (TPC-SRS-RNTI): For indication of power control command for SRS
In an embodiment, the above-described DCI formats may be defined as shown in Table 11 below.

[Table 11]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |

(continued)

| DCI format | Usage |
|---|---|
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

According to an embodiment of the disclosure, in 5G, a plurality of search space sets may be configured with different parameters (e.g., parameters in Table 10). Accordingly, the set of search space sets monitored by the UE may differ at each time point. For example, in case that search space set #1 is configured with a X-slot period, search space set #2 is configured with a Y-slot period, and X and Y are different, the UE may monitor both search space set #1 and space set #2 in a specific slot, and may monitor one of search space set #1 and search space set #2 in a specific slot.

In case that a plurality of search space sets are configured for the UE, the following conditions may be considered in order to determine a search space set to be monitored by the UE.

[Condition 1: Limit the Maximum Number of PDCCH Candidates]

The number of PDCCH candidates that may be monitored per slot may not exceed $M^\mu$. The $M^\mu$ may be defined as the maximum number of PDCCH candidates per slot in a cell configured to a subcarrier spacing of $15 \cdot 2^\mu$ kHz, and may be defined as shown in Table 12 below.

[Table 12]

| $\mu$ | Maximum number of PDCCH candidates per slot and per serving cell ($M^\mu$) |
|---|---|
| 0 | 44 |
| 1 | 36 |
| 2 | 22 |
| 3 | 20 |

[Condition 2: Limit the Maximum Number of CCEs]

The number of CCEs configuring the entire search space per slot (here, the entire search space may denote the entire set of CCEs corresponding to a union region of a plurality of search space sets) may not exceed $C^\mu$. The $C^\mu$ may be defined as the maximum number of CCEs per slot in a cell configured to a subcarrier spacing of $15 \cdot 2^\mu$ kHz, and may be defined as shown in Table 13 below.

[Table 13]

| $\mu$ | Maximum number of non-overlapped CCEs per slot and per serving cell ($C^\mu$) |
|---|---|
| 0 | 56 |
| 1 | 56 |
| 2 | 48 |
| 3 | 32 |

For the convenience of description, a situation in which both conditions 1 and 2 are satisfied at a specific time point is defined as "condition A". Therefore, not satisfying condition A may refer to not satisfying at least one of the above conditions 1 and 2.

According to the configuration of the search space sets of the base station, a case in which condition A is not satisfied at a specific time point may occur. In case that condition A is not satisfied at a specific time point, the UE may select and monitor only some of the search space sets configured to satisfy condition A at a corresponding time point, and the base station may transmit PDCCH to the selected search space sets.

According to an embodiment of the disclosure, a method for selecting some search spaces from the entire configured search space set may conform to the following method.

[Method 1]

In case that condition A for PDCCH is not satisfied at a specific time point (slot),

The UE (or base station) may prioritize the selection of a search space set, in which a search space type is configured as a common search space, from among search space sets existing at a corresponding time point, than a search space set in which a search space type is configured as a UE-specific search space.

In case that all search space sets configured as common search spaces are selected (i.e., in case that condition A is satisfied even after all search spaces configured as common search spaces are selected), the UE (or base station) may select the search space sets configured as UE-specific search spaces. Here, in case that there are a plurality of search space sets configured as the UE-specific search spaces, a search space set having a low search space set index may have a higher priority. In consideration of the priority, the UE or base station may select the UE-specific search space sets within a range in which condition A is satisfied.

Methods of allocating time and frequency resources for data transmission in NR are described below.

In NR, the following detailed frequency domain resource allocation (FD-RA) methods may be provided in addition to frequency domain resource candidate allocation through BWP indication.

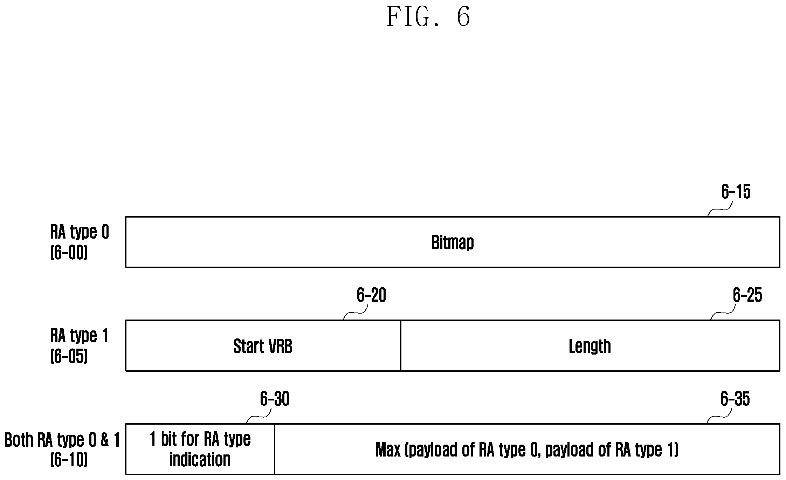

FIG. 6 is a diagram illustrating an example of frequency domain resource allocation of a physical downlink shared channel (PDSCH) in a wireless communication system according to an embodiment of the disclosure.

FIG. 6 is a diagram illustrating three frequency domain resource allocation methods of type 0 (6-00), type 1 (6-05), and dynamic switch (6-10) configurable through a higher layer in NR.

With reference to FIG. 6, in case that a UE is configured to use only resource type 0 via higher layer signaling (6-00), some downlink control information (DCI) for allocation of PDSCH to the corresponding UE includes a bitmap configured by NRBG bits. Conditions for this will be described again later. Here, NRBG denotes the number of resource block groups (RBGs) determined as shown in Table 14 below according to a BWP size allocated by a BWP indicator and a higher layer parameter rbg-Size, and data is transmitted to RBG indicated as "1" by the bitmap.

[Table 14]

| Bandwidth Part Size | Configuration 1 | Configuration 2 |
|---|---|---|
| 1-36 | 2 | 4 |
| 37-72 | 4 | 8 |
| 73-144 | 8 | 16 |
| 145-275 | 16 | 16 |

In case that the UE is configured to use only resource type 1 via higher layer signaling (6-05), some DCI for allocation of the PDSCH to the UE includes frequency domain resource allocation information configured by

$$\left\lceil \log_2 (N_{RB}^{DL,BWP} (N_{RB}^{DL,BWP} +1)/2) \right\rceil$$

bits. Conditions for this will be described again later. Through this information, the base station may figure a starting VRB 6-20 and the length of frequency domain resources 6-25 continuously allocated therefrom.

In case that the UE is configured to use both resource type 0 and resource type 1 via higher layer signaling (6-10), some DCI for allocation of PDSCH to the corresponding UE includes frequency domain resource allocation information configured by bits of a greater value 6-35 among a payload 6-15 for configuration of resource type 0 and payloads 6-20 and 6-25 for configuration of resource type 1. Conditions for the above configuration will be described later. Here, one bit may be added to the most significant bit (MSB) of the frequency domain resource allocation information in the DCI, in case that the corresponding bit has a value of 0, it may indicate that resource type 0 is used; in case that the corresponding bit has a value of 1, it may indicate that resource type 1 is used.

Hereinafter, a method for allocating time domain resources for a data channel in a next-generation mobile communication system (5G or NR system) will be described.

A base station may configure, for a UE, a table for time domain resource allocation information for a downlink data channel (PDSCH) and an uplink data channel (PUSCH) via higher layer signaling (e.g., RRC signaling). With regard to PDSCH, a table including maxNrofDL-Allocations=16 entries may be configured, and with regard to PUSCH, a table including maxNrofUL-Allocations=16 entries may be configured. In an embodiment, the time domain resource allocation information may include PDCCH-to-PDSCH slot timing (corresponding to a time gap in slot units between a time point of receiving a PDCCH and a time point of transmitting a PDSCH scheduled by the received PDCCH, and denoted as K0), PDCCH-to-PUSCH slot timing (corresponding to a time gap in slot units between a time point of receiving a PDCCH and a time point of transmitting a PUSCH scheduled by the received PDCCH, and denoted as K2), information on the position and length of a start symbol for which the PDSCH or PUSCH is scheduled within a slot, a mapping type of PDSCH or PUSCH, and the like. For example, the base station may notify the UE of information such as Table 15 or Table 16 below.

【Table 15】

*PDSCH-TimeDomainResourceAllocationList infomration element*

PDSCH-TimeDomainResourceAllocationList ::= SEQUENCE (SIZE(1.. maxNrofDL-Allocations)) OF PDSCH-TimeDomainResourceAllocation

PDSCH-TimeDomainResourceAllocation ::= SEQUENCE {

k0 INTEGER (0..32)

OPTIONAL, --Need S

(PDCCH-to-PDSCH timing, slot units)

mapping type ENUMERATED {typeA, typeB},

(PDSCH mapping type)

startSymbolAndLength INTEGER (0..127)

(Start symbol and length of PDSCH)

}

【Table 16】

| *PUSCH-TimeDomainResourceAllocationList infomration element* |
| --- |
| PUSCH-TimeDomainResourceAllocationList ::= SEQUENCE (SIZE(1.. maxNrofUL-Allocations)) OF PUSCH-TimeDomainResourceAllocation<br><br>PUSCH-TimeDomainResourceAllocation ::= SEQUENCE {<br><br>k2 INTEGER (0..32)<br><br>OPTIONAL, --Need S<br><br>(PDCCH-to-PUSCH timing, slot units)<br><br>mapping type ENUMERATED {typeA, typeB},<br><br>(PUSCH mapping type)<br><br>startSymbolAndLength INTEGER (0..127)<br><br>(Start symbol and length of PUSCH)<br><br>} |

The base station may notify the UE of one of the entries in the above-described table regarding the time domain resource allocation information to via L1 signaling (e.g., DCI) (e.g., may be indicated by a "time domain resource allocation" field in DCI). The UE may acquire time domain resource allocation information for the PDSCH or PUSCH based on the DCI received from the base station.

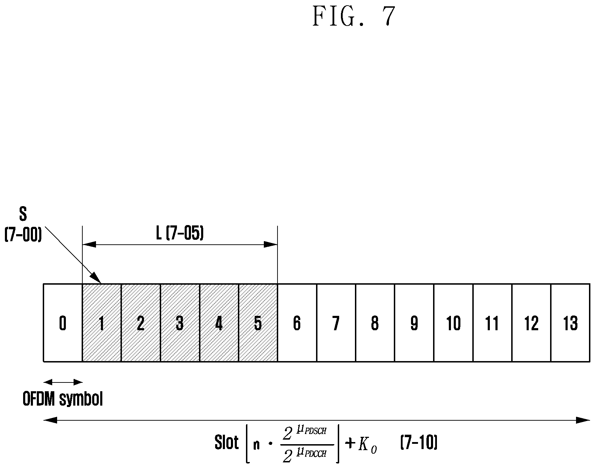

FIG. 7 is a diagram illustrating an example of time-domain resource allocation of a PDSCH in a wireless communication system according to an embodiment of the disclosure.

With reference to FIG. 7, a base station may indicate a time domain position of a PDSCH resource according to a start position 7-00 and length 7-05 of an OFDM symbol in one slot, dynamically indicated based on the subcarrier spacing (SCS) ($\mu_{PDSCH}, \mu_{PDCCH}$) of a data channel and control channel configured using a higher layer, the value of a slot offset ($K_0$), and DCI.

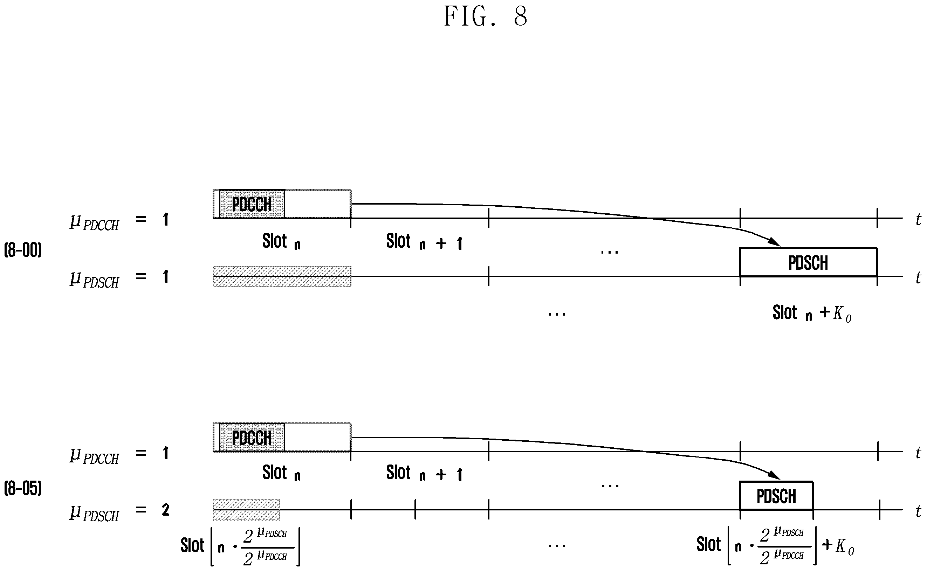

FIG. 8 is a diagram illustrating an example of time domain resource allocation according to a subcarrier spacing of a data channel and control channel in a wireless communication system according to an embodiment of the disclosure.

With reference to FIG. 8, in case that a data channel and control channel have the same subcarrier spacing (8-00, $\mu_{PDSCH}=\mu_{PDCCH}$), since a data slot number and control slot number are the same, a base station and UE may recognize that a scheduling offset occurs in accordance with predetermined slot offset $K_0$. On the other hand, in case that the subcarrier spacing of the data channel and the subcarrier spacing of the control channel are different (8-05, $\mu_{PDSCH} \neq \mu_{PDCCH}$), a data slot number and a control slot number are different, and thus the base station and UE may recognize that a scheduling offset occurs in accordance with predetermined slot offset $K_0$ based on the subcarrier spacing of the PDCCH.

Next, a beam configuration method in which a base station transmits control information and data to a UE will be described. In the disclosure, for convenience of explanation, a process of transmitting control information through a PDCCH may be expressed as transmitting the PDCCH, and a process of transmitting data through a PDSCH may be expressed as transmitting the PDSCH.

First, a beam configuration method for a PDCCH will be described.

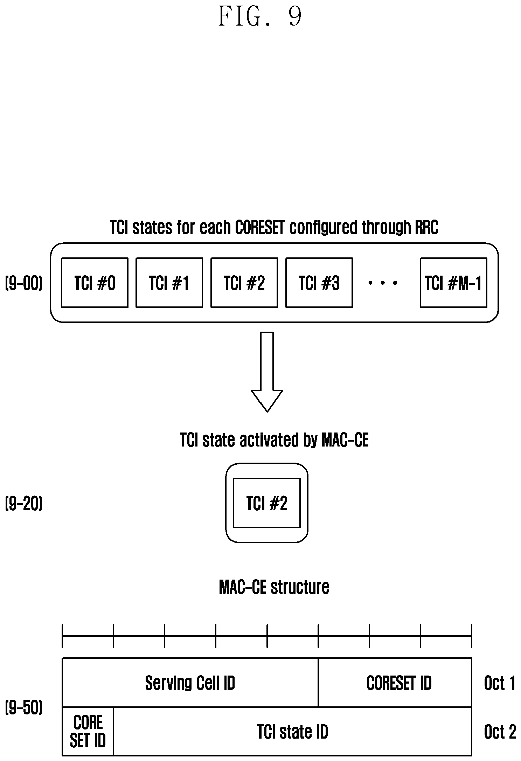

FIG. 9 illustrates a procedure for beam configuration and activation of a PDCCH.

With reference to FIG. 9, first, a list of TCI states for each CORESET may be indicated through a higher layer list such as RRC (9-00). The list of TCI states may be indicated by tci-StatesPDCCH-ToAddList and/or tci-StatesPDCCH-ToReleaseList of Table 8 above. Next, one of the list of the TCI states configured for each CORESET may be activated through an MAC-CE (9-20). Reference numeral 9-50 shows an example of the MAC-CE structure for TCI state activation of the PDCCH. The meaning of each field in the MAC CE and values configurable for each field are as follows.

[Table 17]

| |
|---|
| - Serving Cell ID (serving cell identity): This field indicates the identity of the Serving Cell for which the MAC CE applies. The length of the field is 5 bits;<br><br>- CORESET ID(CORESET identity): This field indicates a Control Resource Set identified with *ControlResourceSetId* as specified in TS 38.331 [5], for which the TCI State is being indicated. In case the value of the field is 0, the field refers to the Control Resource Set configured by *controlResourceSetZero* as specified in TS 38.331 [5]. The length of the field is 4 bits;<br><br>- TCI State ID(Transmssion configuration indication identity): This field indicates the TCI state identified by *TCI-StateId* as specified in TS 38.331 [5] applicable to the Control Resource Set identified by CORESET ID field. If the field of CORESET ID is set to 0, this field indicates a *TCI-StateId* for a TCI state of the first 64 TCI-states configured by *tci-States-ToAddModList* and *tci-States-ToReleaseList* in the *PDSCH-Config* in the active BWP. If the field of CORESET ID is set to the other value than 0, this field indicates a *TCI-StateId* configured by *tci-StatesPDCCH-ToAddList* and *tci-StatesPDCCH-ToReleaseList* in the *controlResourceSet* identified by the indicated CORESET ID. The length of the field is 7 bits. |

Next, a beam configuration method for a PDSCH will be described.

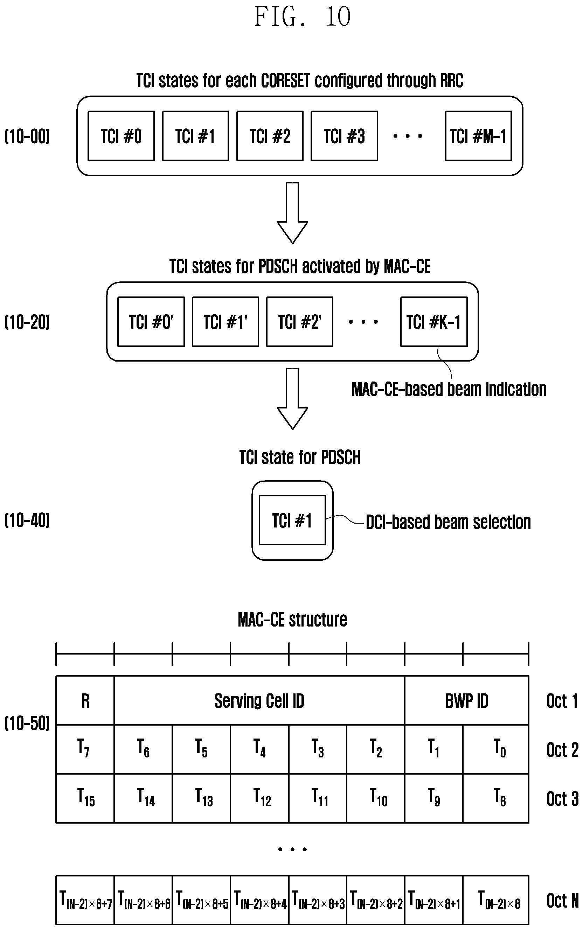

FIG. 10 illustrates a process for beam configuration and activation of a PDSCH according to an embodiment of the disclosure.

With reference to FIG. 10, a list of TCI states for a PDSCH may be indicated through a higher layer list such as RRC (10-00). The list of TCI states may be indicated by, for example, tci-StatesToAddModList and/or tci-StatesToReleaseList in PDSCH-Config IE for each BWP. Next, a part of the list of the TCI states may be activated through the MAC-CE (10-20). The maximum number of activated TCI states may be determined according to the capability reported by a UE. Reference numeral 10-50 shows an example of the MAC-CE structure for TCI state activation/deactivation of the Rel-15-based PDSCH.

The meaning of each field in the MAC CE and values configurable for each field are as follows.

[Table 18]

| |
|---|
| - Serving Cell ID (serving cell identity): This field indicates the identity of the Serving Cell for which the MAC CE applies. The length of the field is 5 bits;<br><br>- BWP ID(Bandwidth Part identity): This field indicates a DL BWP for which the MAC CE applies as the codepoint of the DCI bandwidth part indicator field as specified in TS 38.212 [9]. The length of the BWP ID field is 2 bits;<br><br>- Ti (TCI state identity i): If there is a TCI state with TCI-StateId i as specified in TS 38.331 [5], this field indicates the activation/deactivation status of the TCI state with TCI-StateId i, otherwise MAC entity shall ignore the Ti field. The Ti field is set to 1 to indicate that the TCI state with TCI-StateId i shall be activated and mapped to the codepoint of the DCI Transmission Configuration Indication field, as specified in TS 38.214 [7]. The Ti field is set to 0 to indicate that the TCI state with TCI-StateId i shall be deactivated and is not mapped to the codepoint of the DCI Transmission Configuration Indication field. The codepoint to which the TCI State is mapped is determined by its ordinal position among all the TCI States with Ti field set to 1, i.e. the first TCI State with Ti field set to 1 shall be mapped to the codepoint value 0, second TCI State with Ti field set to 1 shall be mapped to the codepoint value 1 and so on. The maximum number of activated TCI states is 8;<br><br>- R (rserved bit): Reserved bit, set to 0. |

In case of receiving DCI format 1_1 or DCI format 1_2, the UE may receive a PDSCH through one beam of the TCI states activated by the MAC-CE based on information of a transmission configuration indication (TCI) field in DCI (10-40). Whether the TCI field exists is determined by a tci-PresentinDCI value, which is a higher layer parameter in a CORESET configured for reception of the DCI. If tci-PresentinDCI is configured to "enabled" in the higher layer, the UE may identify the TCI field of 3 bits information to determine TCI states activated according to a DL BWP or a scheduled component carrier and the direction of a beam linked to DL-RS.

<First embodiment: Overview of Network-controlled repeater>

Coverage is an important factor in a wireless communication system. 5G is currently being commercialized and mmWave is also included in the commercialization. However, due to the limited coverage, there is not much actual use. Many service providers are looking for a method for economically operating communication systems while providing stable coverage at the same time. Service providers may consider installing multiple base stations, but the high cost has led them to look for a more cost-effective method.

For this reason, the first technology considered is an integrated access and backhaul (IAB), which has been studied over Rel-16 and Rel-17. The IAB is a kind of relay that does not require a wired backhaul network, and performs relaying of signals between a base station and a UE. The IAB has a similar performance to that of a base station, to thereby having the disadvantage of increasing costs.

Second, conventional RF repeaters may be considered. The RF repeaters are the most basic unit of repeater, which amplify a received signal and transmit the amplified signal. The RF repeaters have the advantage of being inexpensive because they perform amplification and transmission simply, but they cannot actively respond to various situations. As an example, the RF repeaters typically use omni antennas rather than directional antennas, and thus beamforming gain cannot be obtained. In addition, the RF repeaters may be a source of interference because they amplify and transmit noise even in case that there are no terminals connected to the RF repeater.

The IABs and RF repeaters show that their advantages and disadvantages are biased in terms of performance and cost. In order to realistically increase coverage, not only performance but also cost should be considered, and thus the need for a new terminal or amplifier is emerging.

Currently, in 3GPP Rel-18, research is underway on a network-controlled repeater that maintains the simple amplification and transmission operation of the RF repeater and enables beamforming technology with an adaptive antenna. For convenience of description, the network-controlled repeater will be referred to as NetRep hereinafter. However, the use of these terms does not limit the technical scope of the disclosure. In order for the NetRep to transmit a signal to the UE by using an adaptive antenna within a base station cell, the NetRep should be able to receive a control signal from a base station. Therefore, NetRep may include repeater-mobile termination (MT) and repeater-radio unit (RU) similar to IAB. The repeater-MT may communicate like a typical UE from the viewpoint of the base station. On the other hand, the repeater-RU includes only the basic RF or physical layer and may perform transmission and reception operations using an adaptive antenna under base station control. In addition to transmitting and receiving operations using adaptive antennas, the NetRep may also perform dynamic TDD configurations, on/off or power control for interference control.

The NetRep may basically amplify the signal transmitted from the base station and transmit the amplified signal to the UE, and may transmit the signal transmitted from the UE to the base station. Therefore, the NetRep may amplify and transmit signals or channels transmitted and received between the base station and the terminal without detecting or decoding the signals or channels. Therefore, from the point of view of the UE, the NetRep between the base station and the UE is not visible. In other words, the UE is unable to distinguish between the base station and the NetRep, and the NetRep may appear to be a base station. Since the UE does not need any additional information or operation for the NetRep, a UE supporting any release may be supported by the NetRep.

As described above, from the point of view of the base station, the NetRep may be seen as a general type of UE. In case that the NetRep is first installed, the NetRep may perform an initial access to the base station like a general terminal, and after a higher layer connection is established, may receive a configuration that a UE would normally receive. The NetRep may perform an operation of amplifying a signal or channel and transmitting the amplified signal or channel after being connected to the base station. From the point of view of the base station, it is necessary to know whether the UE is directly connected to the base station or connected through the NetRep. In case that the UE is within the coverage of the NetRep, the UE may communicate with the base station through the NetRep, and the base station may recognize this through its implementation.

The base station may know which UE performs communication through which NetRep, but the NetRep is unable to know this fact. Regardless of whether a UE is located within its coverage or not, the NetRep may perform an operation of amplifying a signal and transmitting the amplified signal to the UE under the control of the base station. In order for the base station to control the NetRep, a control signal that plays a similar role to that of the DCI may be required. In the disclosure, this control signal is defined as side control information (SCI) for convenience. However, the use of these terms does not limit the technical scope of the disclosure. The SCI may refer to a control channel transmitted by the base station to control the NetRep, and is an unknown signal from the point of view of the UE, and may be recognized only by the base station and the NetRep. The SCI is not limited to the terms described in this disclosure, and other terms having equivalent technical meanings, such as repeater-DCI (R-DCI), repeater control information (RCI), etc. In order for the NetRep to dynamically use an adaptive antenna through the SCI, it is necessary to define when and which spatial antenna parameters to use.

<Second Embodiment: Network-controlled repeater (NetRep) beam indication>

The existing TCI state framework may be viewed as a way to designate for a base station to designate SSB or CSI-RS as a QCL source and to inform the UE of information that the base station transmits using the same beam as the corresponding QCL source. For example, if the base station configures 64 SSBs and indicates the UE to use SSB #1 and a TCI state that it is QCLed, the UE may prepare for reception in response to the spatial parameters of the antenna used by the base station for SSB #1.

For example, in a link between the base station and a repeater (base station-repeater link), like an existing UE, the NetRep receives an indication of the existing TCI state from the base station and may receive a signal or channel transmitted by the base station using the spatial parameters of the corresponding antenna.

However, since the existing TCI state framework uses the base station's SSB or CSI-RS as a QCL source, it may not be applicable to a link between the repeater and the UE (repeater-UE link). From the point of view of NetRep, it may be difficult to use the existing TCI state framework because the spatial parameters of the antenna used when transmitting in the UE direction cannot use the QCL source of the base station.

Therefore, the disclosure proposes an R-TCI state framework that allows the base station to simply configure/indicate the spatial parameters of the repeater's antenna. Here, the R-TCI state is illustrated for convenience. The R-TCI state refers to the index of the spatial parameters of the antenna used in case that the NetRep transmits and receives to the UE, and may have a similar meaning to QCL-Type D of the existing TCI state. Accordingly, the disclosure is not limited to the terms to be described later, and other terms having equivalent technical meaning may be used.

As an example of methods to apply the R-TCI state, when the repeater reports to the base station the number of spatial parameter sets of available antennas or the number of resources available as sources of QCL-Type D, the base station may provide mapping as shown in Table 19 below to the repeater through higher layer signaling. As another example, without reporting from the repeater, the base station may provide mapping as shown in Table 19 below to the repeater through higher layer signaling.

Table 19 is an example to describe a mapping relationship between the R-TCI state and QCL source that may be configured in the repeater.

[Table 19]

| R-TCI state | QCL source |
|---|---|
| R-TCI #0 | SSB#0 |
| R-TCI #1 | SSB#1 |
| R-TCI #2 | QCLed with SSB#0 |
| R-TCI #3 | QCLed with SSB#0 |
| R-TCI #2 | QCLed with SSB#1 |
| R-TCI #3 | QCLed with SSB#1 |

The QCL source in Table 19 may indicate a signal amplified and transmitted by the repeater among the signals/channels received from the base station. Here, the signal may include a cell-specific signal that is configured together across all cells of the base station. The R-TCI state is not recognized from the viewpoint of the UE, and may only be recognized between the base station and the repeater. Therefore, the base station provides the configurations in [Table 19] to the repeater. When the UE reports to the base station that it has reference signal received power (RSRP) with the highest SSB#0 value, it may be seen that the repeater has performed amplification and transmission using the antenna space parameters corresponding to R-TCI#0. The base station may activate or deactivate the R-TCI state in [Table 19] using MAC-CE.

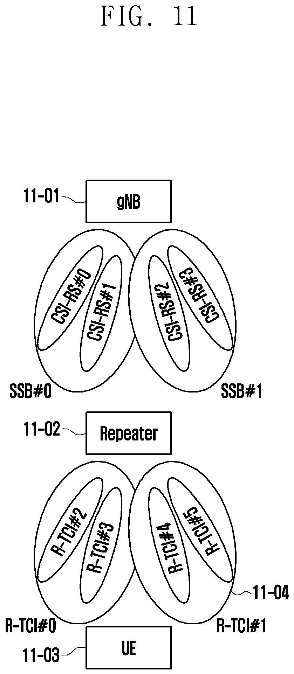

FIG. 11 illustrates an example R-TCI state according to an embodiment of the disclosure.

With reference to FIG. 11, from the point of view of NetRep 11-02, it may expect a process in which a base station 11-01 transmits SSB or CSI-RS to a UE 11-03 through an NetRep 11-02. The antenna spatial parameters of SSB or CSI-RS or QCL-Type D between the base station and the NetRep may be configured to the NetRep or may be configured through the existing TCI state. Meanwhile, the R-TCI state may be used for the antenna spatial parameters or QCL-Type D between the NetRep and the UE. Here, the NetRep may configure the antenna spatial parameters for each R-TCI state ID with the implementation shown in FIG. 11. Further, when the NetRep receives the information shown in Table 19 from the base station through a higher layer and is indicated to receive an R-TCI state ID, the NetRep may be able to amplify and transmit the signal/channel to be delivered to the UE using the corresponding antenna spatial parameters or QCL-Type D. For example, when the NetRep is indicated to receive R-TCI#1, it may amplify and transmit using antenna spatial parameters that provide a beam formed in the 11-04 direction.

<Situation 1: Cell-specific signal R-TCI state indication>

The base station may configure a signal or channel commonly configured within a cell for the UE. For example, the base station may commonly configure information about the SSB for all UEs within the cell. The NetRep may receive a signal or channel commonly configured within the cell of the base station. In this case, the NetRep may share the same configurations as the UE. In case that the NetRep amplifies and transmits a cell-specific signal, time information may be known, and antenna spatial parameters may be determined by the implementation of the NetRep. Here, the meaning that it may be determined by implementation includes the meaning that the NetRep implementation determines which antenna spatial parameters will be applied to the cell-specific signal. For example, if R-TCI#0 in Table 19, which may be provided through a higher layer from the base station, is mapped to SSB#0, the NetRep may know that the antenna spatial parameter used when amplifying and transmitting SSB#0 is referred to as R-TCI#0, but the antenna spatial parameters actually used may be applied by the implementation of the NetRep. Alternatively, the base station may configure the antenna spatial parameters corresponding to the R-TCI state of the mapping configured in Table 19 through higher layer configurations.

Even if mapping information such as Table 19 is not provided, the NetRep may amplify and transmit cell-specific signals by implementation.

<Situation 2: UE-specific signal R-TCI state indication>

The base station may configure a UE-specific signal or channel for the UE within the cell. For example, the base station may configure a UE-specific search space for the UE and provide a UE-specific PDCCH to the UE. Further, if the control information includes a data resource, the UE may receive the PDSCH. In this case, the UE may receive QCL information for control information and data information from the base station. For example, QCL information about PDCCH may be configured through MAC-CE, and QCL information about PDSCH may be obtained through activation/deactivation configurations via MAC-CE and through indications via DCI. Since the above operations are all UE-specific configurations, the NetRep may not recognize the operations unless the base station separately configures the operations for the NetRep. If the base station configures information about all UEs within coverage for the NetRep, the NetRep may recognize the signals and channels previously configured by a higher layer and amplify and transmit the signals and channels with the corresponding QCL. However, from the point of view of the NetRep, which cannot decode control information and data information transmitted to the UE, there is a limitation in that the NetRep cannot recognize resources dynamically allocated to the UE. Therefore, in case that the base station dynamically transmits signals and channels to the UE through the NetRep, there is a need to first indicate the NetRep on which time resource and which antenna spatial parameter to use.

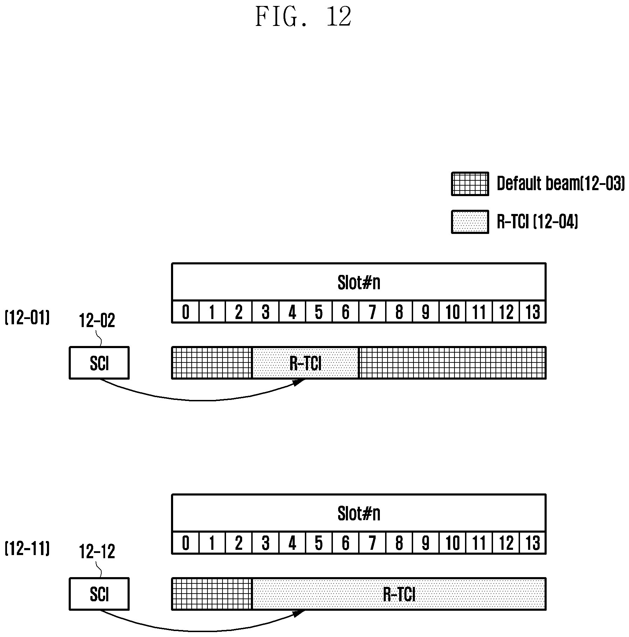

FIG. 12 illustrates an example in which a base station indicates an R-TCI state to an NetRep according to an embodiment of the disclosure.

With reference to FIG. 12, an NetRep may expect the R-TCI state 12-04 and its corresponding time resources to be configured with detected SCIs 12-02 and 12-12. The NetRep is indicated with the R-TCI and may operate in at least one of two operations (12-01 and 12-11).

The first operation (12-01) is a method in which the R-TCI state 12-04 indicated by the base station to the NetRep through the SCI 12-02 is time-constrained. For example, the NetRep that did not receive any SCI in 12-01 may initially use a default R-TCI state 12-03 for amplification and transmission. Here, the NetRep may expect to receive the default R-TCI configurations through a higher layer (e.g., RRC or MAC-CE). In case that there is no higher layer configuration, it may operate as a NetRep implementation. If the NetRep detects an SCI including R-TCI, the NetRep may perform amplification and transmission by applying the antenna spatial parameters corresponding to the indicated R-TCI state in the indicated time resource, and may return to the default R-TCI and perform amplification and transmission when the indicated time resource ends. If the default R-TCI state is not configured, the NetRep may no longer perform amplification and transmission operations after amplification and transmission based on the indicated R-TCI state in the indicated time resource are completed. For example, if the indicated R-TCI state ends at n symbols, the NetRep may not perform amplification and transmission operations starting from n+1 symbols.

The second operation (12-11) is a method in which the R-TCI state 12-04 indicated by the base station to the NetRep through the SCI 12-12 has no time constraints. For example, the NetRep that did not receive any SCI in 12-11 may initially use the default R-TCI state 12-03 for amplification and transmission. Here, the NetRep may expect to receive the default R-TCI configurations through a higher layer (e.g., RRC or MAC-CE). In case that there is no higher layer configuration, it may operate as NetRep implementation. If the NetRep detects an SCI including the R-TCI state, the NetRep may perform amplification and transmission by applying antenna spatial parameters corresponding to the indicated R-TCI state in the indicated time resource. The indicated time resource may not have information about the duration of the R-TCI state, or even if the duration exists, it may not be applied. The indicated R-TCI may be maintained until an SCI including a new R-TCI state is indicated. If the default R-TCI state is not configured, the NetRep may no longer perform amplification and transmission operations after amplification and transmission based on the indicated R-TCI state in the indicated time resource are completed. For example, if the indicated R-TCI state ends at n symbols, the NetRep may not perform amplification and transmission operations starting from n+1 symbols.

The above distinct operations (12-01, 12-11) are provided for illustrative purposes, but they are not mutually exclusive and may be applied in appropriate combination with each other depending on the situation.

In the above embodiment, the SCIs 12-02 and 12-12 may be detected based on the configurations of common search space (CSS) or UE specific search space (USS). If CSS is configured, the NetRep may be provided with the RNTI used when monitoring the PDCCH including the corresponding DCI format. For example, the RNTI may be configured with a NetRep-only RNTI, but is not limited thereto. In addition, the position and payload size corresponding to the NetRep configured within the field in the corresponding DCI format may be configured through higher layer parameters. If USS is configured, the NetRep may be provided with the RNTI (e.g., C-RNTI) used when monitoring the PDCCH of the corresponding DCI format.

A detected SCI may be expected to include at least the following information. However, this is only an example, and SCI elements are not limited to the above elements.

The SCI element including the R-TCI state may include at least the following information:

- slot offset,
- time resource, and/or
- R-TCI state ID.

In the above information, the slot offset may indicate the slot to which R-TCI will be applied on the basis of the slot including the detected SCI. The time resource may expect a start and length indicator value (SLIV) for the 12-01 method, and may indicate the SLIV or start symbol for the 12-11 method. In case that 12-01 and 12-11 are used interchangeably, if the SLIV is included, it may indicate the 12-01 operation, and in case that there is a start symbol, it may indicate the 12-11 operation.

It may need time to prepare decoding time or related antenna operation until the NetRep detects/acquires the SCI and performs the R-TCI state indication operation described above. Therefore, at least X symbols may be required between the last symbol of SCI and the first symbol to which the R-TCI state is applied. For example, the X may be configured by the base station to the NetRep through higher layer signaling (e.g., RRC) on the basis of a NetRep's capability report. Alternatively, even without the capability report, the base station may configure the X for the NetRep through higher layer signaling (e.g., RRC).

<Third embodiment: Network-controlled repeater (NetRep) beam pattern indication>

According to the embodiment described in the second embodiment, in case that the NetRep needs to change the antenna spatial parameters several times, the base station needs to indicate SCI each time. This may be a necessary operation in case that a signal or channel needs to be dynamically transmitted/received to/from the UE. However, in the case of static transmission/reception to/from the UE, detecting multiple SCIs to change multiple antenna spatial parameters consumes unnecessary resources and may increase network overhead when operating the NetRep. Here, statically transmission and reception may include a case where resources have already been determined, such as CSI-RS or SPS PDSCH. In the above case, by configuring time resources and R-TCI corresponding to the NetRep through a higher layer (e.g., RRC) and dynamically indicating SCI if necessary, the advantage of reducing overhead may be obtained. Therefore, in case that time resources and corresponding R-TCI may be configured in advance, an operation of indicating multiple R-TCI states with one SCI may be required. In addition, even in case that the NetRep may use one or more panels that operate independently from each other, an operation of receiving an indication for multiple R-TCI states with one SCI may be required.

<Situation 1: a case where only one individual Panel exists>

Hereinafter, a method for indicating an R-TCI state with different time resources in case that there is only one panel in the NetRep will be described. An embodiment to be described is based on the assumption of Situation 2 in the second embodiment.

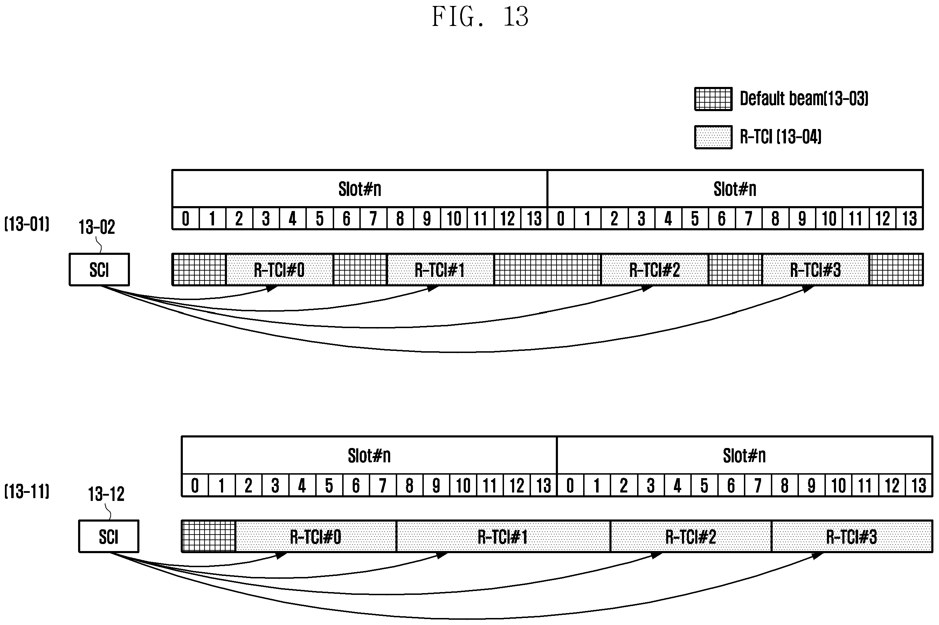

FIG. 13 illustrates an example in which a base station indicates an R-TCI state pattern to a NetRep according to an embodiment of the disclosure.

With reference to FIG. 13, the NetRep may receive an indication of an R-TCI state 13-04 with different time resources (or patterns) from detected SCIs 13-02 and 13-12. That is, the NetRep may receive the SCI from the base station, and the SCI may include a plurality of R-TCI states. In addition, each R-TCI state may correspond to a different time resource. The NetRep may be instructed by the SCI including R-TCI and may operate in at least one of two operations (13-01 and 13-11).

The first operation (13-01) is a method in which the R-TCI state 13-04 indicated by the base station to NetRep through the SCI 13-02 is time-constrained. For example, the NetRep that did not receive any SCI in operation 13-01 may initially use a default R-TCI state 13-03 to perform amplification and transmission. Here, the NetRep may expect to receive a default R-TCI configuration through a higher layer (e.g., RRC or MAC-CE). If there is no higher layer configuration, it may operate as a NetRep implementation. If the NetRep detects an SCI including an R-TCI with one or more time resources, the NetRep may perform amplification and transmission by applying antenna spatial parameters corresponding to the indicated R-TCI in the indicated time resource, and may return to the default R-TCI and perform amplification and transmission when the indicated time resource ends.

For example, in the first operation (13-01), a plurality of R-TCI states indicated based on the SCI may correspond to time resources configured in element order of the set of R-TCI states. For example, resource 1, resource 2, resource 3, and resource 4 are configured in time order in the time domain. In case that based on the SCI, R-TCI#0, R-TCI#1, R-TCI#2, R-TCI#3 are indicated, resource 1-R-TCI#0, resource 2-R-TCI#1, resource 3-R-TCI#2, and resource 4-R-TCI#3 may correspond, respectively. In addition, in case that a time gap exists between respective resources, the default R-TCI may be applied in the time gap.

For example, in case that the number of configured resources is greater than the number of R-TCI states, the R-TCI may be applied in a cyclic shift method. In case that there are more R-TCI states than the number of configured resources, the R-TCI states that are not corresponded may be ignored.

If the default R-TCI state is not configured, the NetRep may no longer perform amplification and transmission operations after amplification and transmission based on the indicated R-TCI states in the indicated time resource are completed. For example, if the indicated R-TCI state ends at n symbols, the NetRep may not perform amplification and transmission operations starting from n+1 symbols.

The second operation (13-11) is a method in which the R-TCI state 13-04 indicated by the base station to the NetRep through the SCI 13-12 has no time constraints. For example, the NetRep that did not receive any SCI in operation 13-11 may initially use the default R-TCI state 13-03 to perform amplification and transmission. Here, the NetRep may expect to receive the default R-TCI configuration through a higher layer (e.g., RRC or MAC-CE). In case that there is no higher layer configuration, it may operate as a NetRep implementation. If the NetRep detects an SCI including an R-TCI with one or more time resources, the NetRep may perform amplification and transmission by applying antenna spatial parameters corresponding to the indicated R-TCI in the indicated time resource. The indicated time resource may not have information about duration, or may not be applied even if duration exists. The indicated R-TCI may be maintained until an SCI including a new R-TCI state is indicated.

For example, in the second operation (13-11), a plurality of R-TCI states indicated based on the SCI may correspond to time resources configured in element order of the set of R-TCI states. For example, resource 1, resource 2, resource 3, and resource 4 are configured in time order in the time domain. In case that based on the SCI, R-TCI#0, R-TCI#1, R-TCI#2, R-TCI#3 are indicated, resource 1-R-TCI#0, resource 2-R-TCI#1, resource 3-R-TCI#2, and resource 4-R-TCI#3 may correspond, respectively. In addition, the R-TCI state applied in response to a specific resource may remain valid until a new resource is started.

For example, if the number of configured resources is greater than the number of R-TCI states, R-TCI may be applied in a cyclic shift method. In case that there are more R-TCI states than the number of configured resources, the R-TCI states that are not corresponded may be ignored.

If the default R-TCI state is not configured, the NetRep may no longer perform amplification and transmission operations after amplification and transmission based on the indicated R-TCI state in the indicated time resource are completed. For example, if the indicated R-TCI state ends at n symbols, the NetRep may not perform amplification and transmission operations starting from n+1 symbols.

The above distinct operations (13-01, 13-11) are provided for illustrative purposes, but they are not mutually exclusive and may be applied in appropriate combination with each other depending on the situation.

In the above embodiment, the SCIs 13-02 and 13-12 may be detected based on the configuration of CSS or USS. If CSS is configured, the NetRep may be provided with the RNTI used when monitoring the PDCCH including the corresponding DCI format. For example, the RNTI may be configured with a NetRep-only RNTI, but is not limited thereto. In addition, the position and payload size corresponding to the NetRep configured within the fields in the DCI format may be configured through higher layer parameters. If USS is configured, the NetRep may be provided with the RNTI (e.g., C-RNTI) used when monitoring the PDCCH of the corresponding DCI format.

The detected SCI may be expected to include at least the following information. However, this is only an example, and SCI elements are not limited to the above elements.

An SCI element including an R-TCI state with one or more time resources may include at least the following information::

- R-TCI state set list field, and/or
- Time Domain Resource allocation (TDRA) set list field.

The R-TCI state set list field and TDRA set list field of the above information may indicate codepoints in Table 20 and Table 21 below, respectively. However, this is only an example of one embodiment, and its use may be indicated by other fields with equivalent technical meaning. The R-TCI state set list and TDRA set list may be provided to the NetRep through a higher layer (e.g., RRC). Here, the R-TCI state set list may be expected to include at least the information shown in Table 20 below.

Table 20 is an example of an R-TCI state set list according to an embodiment of the disclosure.

[Table 20]

| Codepoint | R-TCI state set |
|---|---|
| 0 | {R-TCI#0, R-TCI# 1, R-TCI#2, R-TCI#3 } |
| 1 | {R-TCI#4, R-TCI#5, R-TCI#6, R-TCI#7 } |

The left column in Table 20 represents the Codepoint, and its use may be indicated by SCI's R-TCI state set list field or another field with equivalent technical meaning. The right column represents the R-TCI state set corresponding to the codepoint. {R-TCI#0, R-TCI#1, R-TCI#2, R-TCI#3} in the R-TCI state set means a set of R-TCI state IDs or may be a set of information corresponding thereto. The R-TCI state set may include one or more R-TCI state IDs. Information corresponding to Table 20 above may be provided by a higher layer (RRC).

The TDRA set list may be expected to include at least the information shown in Table 21 below.

Table 21 is an example of a TDRA set list according to an embodiment of the disclosure.

[Table 21]

| Codepoint | TDRA set |
|---|---|
| 0 | { TDRA #0, TDRA#1, TDRA #2, TDRA #3 } |
| 1 | { TDRA #4, TDRA #5, TDRA #6, TDRA #7 } |

The left column in Table 21 represents the Codepoint, and its use may be indicated by SCI's TDRA set list field or another field with equivalent technical meaning. The right column represents the TDRA set corresponding to the codepoint. {TDRA#0, TDRA#1, TDRA#2, TDRA#3} in the TDRA set means a set of TDRA IDs or may be a set of information corresponding thereto. A TDRA set may include one or more TDRA IDs.

Here, in operation 13-01, TDRA may include at least the following information:

- Slot offset and/or
- one of SLIV and bitmap (e.g., 14 bit).

In the above information, the slot offset may indicate the slot to which R-TCI will be applied based on the slot including the detected SCI. Further, in case that the SLIV is provided, it may include both start symbol and duration information like existing SLIV. In case that the bitmap method is applied, the NetRep may be provided with a bitmap of a specific length (e.g., 14 bit string), and it may be seen that the R-TCI state is applied where the bit is '1', and is not applied where the bit is '0'.

Meanwhile, in operations 13-11, TDRA may include at least the following information:

- Slot offset and/or
- one of SLIV, bitmap (e.g., 14 bit), and start symbol index.

In the above information, the slot offset may indicate the slot to which the R-TCI will be applied based on the slot including the detected SCI. Further, in case that the SLIV is provided, it may include both the start symbol and information about the duration like the existing SLIV, but only the start symbol is applied and the information about the duration may be ignored. In case that the bitmap method is provided, a bitmap of a specific bit length (e.g., 14 bit string) is provided, and it may be seen that this is the start symbol to which the R-TCI state is applied where the bit is '1'. It may be seen that it is not the start symbol where the bit is '0'. If the start symbol index is provided, it may be seen that the R-TCI state starts from the corresponding start symbol.

In case that the 13-01 operation and the 13-11 operation are used interchangeably, if SLIV or bit map is included, it may indicate the 13-01 operation, and in case that only the start symbol is included, the 13-11 operation may be indicated.

<Situation 2: a case where one or more Panels exist>

Hereinafter, a method for indicating an R-TCI state with different time resources in case that one or more panels exist in the NetRep will be described. Here, it is assumed that different panels may operate independently and simultaneous transmission is possible. An embodiment to be described is based on the assumption of Situation 2 in the second embodiment.

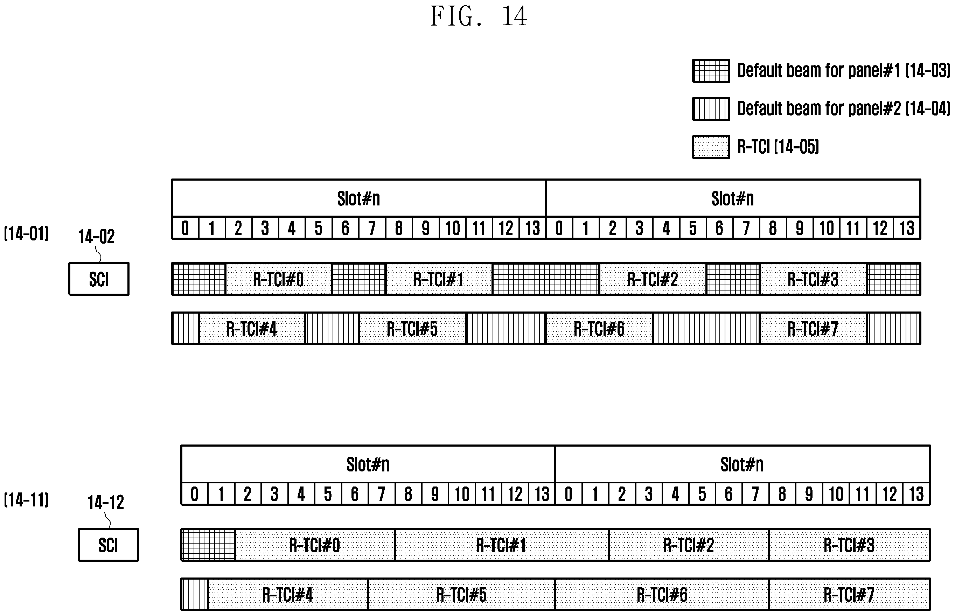

FIG. 14 illustrates an example in which a base station indicates an R-TCI state pattern in case where two panels exist for the NetRep according to an embodiment of the disclosure. FIG. 14 assumes the case where two panels exist for convenience of explanation, but the scope of the disclosure is not limited thereto and, it is apparent that this may also be applied in case that three or more panels exist.

With reference to FIG. 14, the NetRep may receive an R-TCI state 14-05 with different time resources (Pattern) for each panel from the detected SCIs 14-02 and 14-12. The NetRep may be indicated by an SCI including an R-TCI and may operate in at least one of two operations (14-01 and 14-11). In addition, when describing FIG. 14, the proposed methods in FIG. 13 described above may be referred to.

The first operation (14-01) is the same as the operation 13-01 described in Situation 1, but the difference is that the first operation may be applied to each panel. Here, default R-TCI states 14-03 and 14-04 applied to panel #1 (14-03) and applied to panel #2 (14-04) may be the same or different. The NetRep may expect to receive the default R-TCI state configuration through a higher layer (e.g., RRC or MAC-CE). In case that there is no higher layer configuration, it may operate as NetRep implementation.

The second operation (14-11) is the same as the operation 13-11 described in Situation 1, but the difference is that the second operation may be applied to each panel. The default R-TCI state is the same as the operation described previously.

The above distinct operations (14-01, 14-11) are provided for illustrative purposes, but they are not mutually exclusive and may be applied in appropriate combination with each other depending on the situation.

In the above embodiment, the SCIs 14-02 and 14-12 may be detected based on the configuration of CSS or USS. If CSS is configured, the NetRep may be provided with the RNTI used when monitoring the PDCCH including the corresponding DCI format. For example, the RNTI may be configured with a NetRep-only RNTI, but is not limited thereto. In addition, the position and payload size corresponding to the NetRep configured within the fields in the DCI format may be configured with higher layer parameters. If USS is configured, the NetRep may be provided with the RNTI (e.g., C-RNTI) used when monitoring the PDCCH of the corresponding DCI format.

The detected SCI may be expected to include at least the following information. However, this is only an example, and SCI elements are not limited to the above elements.

For the NetRep supporting N panels, the base station may transmit an SCI including the following information to the NetRep. For example, an SCI element including one or more time resources and one or more R-TCI states may include at least the following information:

```
Panel0{
 - R-TCI state set list field
```

```
- TDRA set list field
},
Panel1{
- R-TCI state set list field
- TDRA set list field
},...,
PanelN{
- R-TCI state set list field
- TDRA set list field
}.
```

The SCI element may include a panel identity (ID), an R-TCI state (set) corresponding to the panel identity, and a TDRA set. In the above information, N may mean the number of panels that the NetRep may support. The R-TCI state set list field and TDRA set list field included as the elements in each panel may respectively indicate the codepoints in Table 20 and Table 21 described in <Situation 1>. Further, the same operation as described in Situation 1 may be expected independently for each panel.

Meanwhile, the NetRep may not expect that the SCI always includes information about N panels. Therefore, even if the NetRep supports N panels, information corresponding to N or less panels may be configured in SCI.

The above-described embodiments and/or methods may be performed separately, or two or more embodiments or methods may be combined and performed together. In addition, when performing some embodiments, methods of other embodiments may be referenced/used.

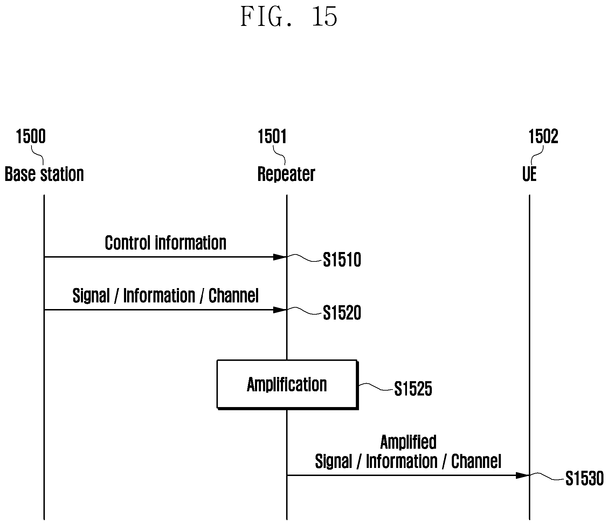

FIG. 15 illustrates a signaling procedure between a base station 1500, a repeater 1501, and a UE 1502 according to an embodiment of the disclosure.

A signaling procedure in FIG. 15 may be performed based on the above-described embodiment and/or method. In FIG. 15, some operations may be omitted, or two or more operations may be combined and performed as one operation.

In addition, a repeater in FIG. 15 is a repeater controlled by a network and may correspond to the NetRep described above. A UE in FIG. 15 may be a subordinate (or next hop) repeater of the repeater in FIG. 15.

With reference to FIG. 15, in operation S1510, a base station may transmit control information to the repeater. That is, the repeater may receive control information from the base station. The control information may be scrambled by the RNTI associated with the repeater.

For example, the control information may include information associated with a beam for a signal to be transmitted from the repeater to the UE. The information associated with the beam may include at least one of information about a time resource, a slot offset, and an identity associated with the beam. The information about the time resource may include a start symbol and duration.

At least one beam for a signal to be transmitted from the repeater to the UE may be configured on the basis of the information associated with the beam. For example, in case that a plurality of beams are configured, each beam may correspond to a different time resource. The different time resources and plurality of different beams may correspond sequentially.

In operation S 1520, the base station may transmit a signal (or channel, information, etc.) to the repeater. That is, the repeater may receive signals from the base station. The signal may include information for the base station to deliver to the UE through the repeater.

In operation S1530, the repeater may transmit the signal received from the base station to the UE. That is, the UE may receive a signal from the repeater. The repeater may perform the process of amplifying the signal received from the base station in S 1525 before operation S 1530 and transmit the amplified signal to the UE.

Here, the repeater may transmit a signal to the UE based on the beam indicated by information associated with the beam in the control information. For example, the repeater may identify the information about the time resource and the identity associated with the beam based on the information associated with the beam. Thereafter, the repeater may transmit, to the UE, the signal received from the base station within the time resource using the beam corresponding to the identity associated with the beam. Outside (after) the time resource, the repeater may not perform amplification and transmission. The beam indicated by the information associated with the beam may mean spatial parameters or QCL information applied to the link between the repeater and the UE.

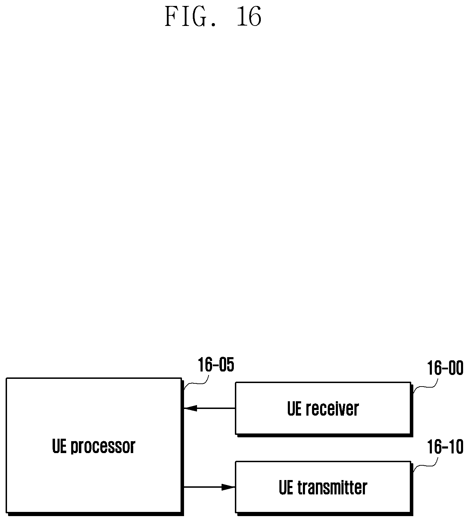

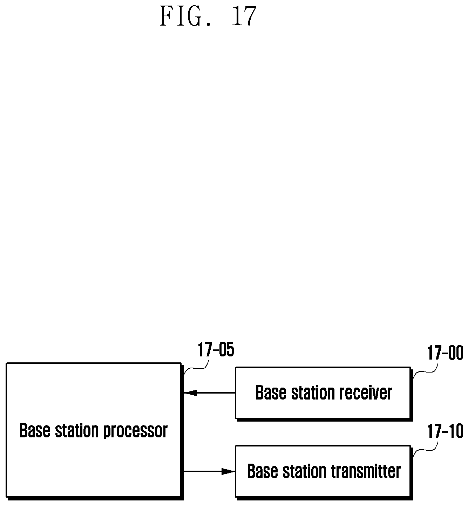

The above-described embodiments and/or methods and signaling procedure in FIG. 15 may be performed by the UE and base station in FIGS. 16 and 17.

FIG. 16 is a block diagram illustrating a structure of a UE in a wireless communication system according to an embodiment of the disclosure.

With reference to FIG. 16, the UE may include a UE receiver 16-00, a UE transmitter 16-10, and a UE processor (a controller) 16-05.

The UE receiver 16-00 and UE transmitter 16-10 may be collectively called a transceiver. According to the communication method of the UE described above, the UE receiver 16-00, UE transmitter 16-10, and UE processor 16-05 of the UE may operate. However, the elements of the UE are not limited to the above-described examples. For example, the UE may include more or fewer elements (e.g., a memory and the like) than the aforementioned elements. In addition, the UE receiver 16-00, UE transmitter 16-10, and UE processor 16-05 may be implemented in the form of a single chip.

The UE receiver 16-00 and UE transmitter 16-10 (or transceiver) may transmit or receive a signal to or from a base station. Here, the signal may include control information and data. To this end, the transceiver may include an RF transmitter for up-converting and amplifying a frequency of a transmitted signal, an RF receiver for low-noise amplifying and down-converting a frequency of a received signal, and the like. However, this is only an embodiment of the transceiver, and the elements of the transceiver are not limited to the RF transmitter and RF receiver.

In addition, the transceiver may receive a signal through a wireless channel and output the received signal to the UE processor 16-05, and may transmit a signal, which is output from the UE processor 16-05, through a wireless channel.

The memory (not shown) may store programs and data necessary for the operation of the UE. In addition, the memory may store control information or data included in a signal acquired by the UE. The memory may be configured as a storage medium, such as ROM, RAM, hard disk, CD-ROM, and DVD or a combination of storage media.

The UE processor 16-05 may control a series of processes so that the UE may operate according to the above-described embodiment. The UE processor 16-05 may be implemented as a controller or one or more processors.

FIG. 17 is a block diagram of a structure of a base station in a wireless communication system according to an embodiment of the disclosure.

With reference to FIG. 17, the base station may include a base station receiver 17-00, a base station transmitter 17-10, and a base station processor (a controller) 17-05.

The base station receiver 17-00 and base station transmitter 17-10 may be collectively called a transceiver. According to the communication method of the base station described above, the base station receiver 17-00, base station transmitter 17-10, and base station processor 17-05 of the base station may operate. However, the elements of the base station are not limited to the above-described examples. For example, the base station may include more or fewer elements (e.g., a memory and the like) than the aforementioned elements. In addition, the base station receiver 17-00, base station transmitter 17-10, and base station processor 17-05 may be implemented in the form of a single chip.

The base station receiver 17-00 and base station transmitter 17-10 (or transceiver) may transmit or receive a signal to or from the UE. Here, the signal may include control information and data. To this end, the transceiver may include an RF transmitter for up-converting and amplifying a frequency of a transmitted signal, an RF receiver for low-noise amplifying and down-converting a frequency of a received signal, and the like. However, this is only an embodiment of the transceiver, and the elements of the transceiver are not limited to the RF transmitter and the RF receiver.

In addition, the transceiver may receive a signal through a wireless channel and output the received signal to the base station processor 17-05, and may transmit a signal, which is output from the base station processor 17-05, through a wireless channel.

The memory (not shown) may store programs and data necessary for the operation of the base station. In addition, the memory may store control information or data included in a signal acquired by the base station. The memory may be configured as a storage medium, such as ROM, RAM, hard disk, CD-ROM, and DVD or a combination of storage media.

The base station processor 17-05 may control a series of processes so that the base station may operate according to the above-described embodiment. The base station processor 17-05 may be implemented as a controller or one or more processors.

In addition, the NetRep of the disclosure may be the same or similar to the apparatus structure in FIG. 16 or FIG. 17 above. For example, the NetRep may include a receiver that receives a signal and a transmitter that transmits the signal. For example, the receiver and transmitter may be implemented as one transceiver. For example, the NetRep may include an amplifier to amplify the signals it receives or transmits. For example, the amplifier may be implemented as part of the receiver or transceiver. For example, the NetRep may include a processor, and the processor may control a series of processes so that the NetRep may operate according to the above-described embodiment of the disclosure.

In the drawings in which methods of the disclosure are described, the order of the description does not always correspond to the order in which steps of each method are performed, and the order relationship between the steps may be changed or the steps may be performed in parallel.

Alternatively, in the drawings in which methods of the disclosure are described, some elements may be omitted and only some elements may be included therein without departing from the essential spirit and scope of the disclosure.

Further, in methods of the disclosure, some or all of the contents of each embodiment may be combined and performed without departing from the essential spirit and scope of the disclosure.

Further, although not set forth in the disclosure, methods which use separate tables or information including at least one element contained in the tables proposed in the disclosure are also possible.

Meanwhile, the embodiments of the disclosure disclosed in the specification and drawings are merely provided as specific examples to easily explain the technical content of the disclosure and aid understanding of the disclosure, and are not intended to limit the scope of the disclosure. In other words, it is obvious to those skilled in the art that other modifications based on the technical idea of the disclosure can be implemented. In addition, each of the above embodiments can be operated in combination with each other as needed.

**Claims**

1. A method performed by a repeater in a wireless communication system comprising:

    receiving control information from a base station, wherein the control information includes information associated with a beam for a signal to be transmitted from the repeater to a terminal;
    receiving a signal from the base station; and
    transmitting the signal, received from the base station, to the terminal based on the beam.

2. The method of claim 1, wherein the information associated with the beam includes at least one of information on a time resource, a slot offset, or an identity associated with the beam.

3. The method of claim 2, wherein the information on the time resource includes a start symbol and a duration.

4. The method of claim 2, wherein the transmitting the signal, received from the base station, to the terminal based on the beam includes:

    identifying the information on the time resource and the identity associated with the beam based on the information associated with the beam; and
    transmitting, to the terminal, the signal received from the base station within the time resource using the beam corresponding to the identity associated with the beam.

5. The method of claim 1, wherein in case that a plurality of the beams are configured, each beam corresponds to a different time resource.

6. The method of claim 1, wherein the control information is scrambled by a radio network temporary identifier (RNTI) associated with the repeater.

7. The method of claim 1, further comprising receiving information that configures a minimum number of symbols between a start symbol of the signal to be transmitted to the terminal based on the beam and a last symbol for which the control information is received,
   wherein the signal to be transmitted to the terminal is transmitted in a symbol after the minimum number of symbols from the last symbol.

8. A method performed by a base station in a wireless communication system, the method comprising:

    transmitting control information to a repeater, wherein the control information includes information associated with a beam for a signal to be transmitted from the repeater to a terminal; and
    transmitting a signal to the repeater,
    wherein the signal, which has been transmitted to the repeater, is delivered to the terminal through the repeater based on the beam.

9. The method of claim 8, wherein the information associated with the beam includes at least one of information on a time resource, a slot offset, or an identity associated with the beam, and
   wherein the information on the time resource includes a start symbol and a duration.

10. The method of claim 8, wherein in case that a plurality of the beams are configured, each beam corresponds to a different time resource, and
    wherein the control information is scrambled by a radio network temporary identifier (RNTI) associated with the repeater.

11. A repeater in a wireless communication system, comprising
    a receiver configured to:

    receive control information form a base station, and

receive a signal from the base station; and
a transmitter,
wherein the control information includes information associated with a beam for a signal to be transmitted from the repeater to a terminal, and
wherein the transmitter is configured to transmit the signal, received from the base station, to the terminal based on the beam.

12. The repeater of claim 11, wherein the information associated with the beam includes at least one of information on a time resource, a slot offset, or an identity associated with the beam, and
wherein the information on the time resource includes a start symbol and a duration.

13. The repeater of claim 12, wherein the repeater further comprises a controller configured to identify the information on the time resource and the identity associated with the beam based on the information associated with the beam; and
wherein the transmitter is configured to transmit, to the terminal, the signal received from the base station within the time resource using the beam corresponding to the identity associated with the beam.

14. The repeater of claim 10, wherein in case that a plurality of the beams are configured, each beam corresponds to a different time resource, and
wherein the control information is scrambled by a radio network temporary identifier (RNTI) associated with the repeater.

15. A base station in a wireless communication system, comprising

a controller; and
a transceiver configured to transmit control information to a repeater and transmit a signal to the repeater,
wherein the control information includes information associated with a beam for a signal to be transmitted from the repeater to a terminal, and
the signal, which has been transmitted to the repeater, is delivered to the terminal through the repeater based on the beam.

# FIG. 1

subframe (1-10)

$N_{symb}^{subframe,\mu}$ OFDM symbols

1 OFDM symbols (1-02)

1 subcarrier (1-03)

$k = N_{RB,x}^{max,\mu} N_{sc}^{RB} - 1$

$N_{RB}^{\mu} N_{sc}^{RB}$ subcarriers

Resource $N_{sc}^{RB}$ subcarriers (1-04)

Resource element (k,l) (1-01)

$k = 0$

Frequency

$\bar{l} = 0$

$\bar{l} = 14 \cdot 2^{\mu} - 1$

Time

# FIG. 2

# FIG. 3

BWP#1
(3-05)

BWP#2
(3-10)

UE bandwidth
(3-00)

Frequency

# FIG. 4

duration
(404)

Frequecy
resources
(403)

UE bandwidth
part (410)

Slot (420)

Frequency

Time

Control resource set#1 (401)

Control resource set#2 (402)

FIG. 5

1 symbol
(5-01)

DMRS
(5-05)

1 PRB
(5-02)

CCE
(5-04)

REG
(5-03)

FIG. 6

EP 4 475 455 A1

| | 6-15 |
|---|---|
| RA type 0 (6-00) | Bitmap |

| | 6-20 | 6-25 |
|---|---|---|
| RA type 1 (6-05) | Start VRB | Length |

| | 6-30 | 6-35 |
|---|---|---|
| Both RA type 0 & 1 (6-10) | 1 bit for RA type indication | Max (payload of RA type 0, payload of RA type 1) |

# FIG. 7

S
(7-00)

L (7-05)

| 0 | 1 | 2 | 3 | 4 | 5 | 6 | 7 | 8 | 9 | 10 | 11 | 12 | 13 |

OFDM symbol

$$\text{Slot} \left\lfloor n \cdot \frac{2^{\mu_{PDSCH}}}{2^{\mu_{PDCCH}}} \right\rfloor + K_0 \qquad \text{(7-10)}$$

# FIG. 8

EP 4 475 455 A1

# FIG. 9

TCI states for each CORESET configured through RRC

[9-00]  | TCI #0 | TCI #1 | TCI #2 | TCI #3 | · · · | TCI #M-1 |

TCI state activated by MAC-CE

[9-20]  | TCI #2 |

MAC-CE structure

[9-50]

| Serving Cell ID | CORESET ID | Oct 1 |
|---|---|---|
| CORE SET ID | TCI state ID | Oct 2 |

# FIG. 10

TCI states for each CORESET configured through RRC

(10-00)

| TCI #0 | TCI #1 | TCI #2 | TCI #3 | · · · | TCI #M-1 |

TCI states for PDSCH activated by MAC-CE

(10-20)

| TCI #0' | TCI #1' | TCI #2' | · · · | TCI #K-1 |

MAC-CE-based beam indication

TCI state for PDSCH

(10-40)

| TCI #1 | —DCI-based beam selection

MAC-CE structure

(10-50)

| R | Serving Cell ID | | | | | BWP ID | | Oct 1 |
|---|---|---|---|---|---|---|---|---|
| $T_7$ | $T_6$ | $T_5$ | $T_4$ | $T_3$ | $T_2$ | $T_1$ | $T_0$ | Oct 2 |
| $T_{15}$ | $T_{14}$ | $T_{13}$ | $T_{12}$ | $T_{11}$ | $T_{10}$ | $T_9$ | $T_8$ | Oct 3 |

· · ·

| $T_{(N-2)\times8+7}$ | $T_{(N-2)\times8+6}$ | $T_{(N-2)\times8+5}$ | $T_{(N-2)\times8+4}$ | $T_{(N-2)\times8+3}$ | $T_{(N-2)\times8+2}$ | $T_{(N-2)\times8+1}$ | $T_{(N-2)\times8}$ | Oct N |

# FIG. 11

# FIG. 12

Default beam(12-03)

R-TCI (12-04)

[12-01]  12-02

SCI

Slot#n

| 0 | 1 | 2 | 3 | 4 | 5 | 6 | 7 | 8 | 9 | 10 | 11 | 12 | 13 |

R-TCI

[12-11]  12-12

SCI

Slot#n

| 0 | 1 | 2 | 3 | 4 | 5 | 6 | 7 | 8 | 9 | 10 | 11 | 12 | 13 |

R-TCI

# FIG. 13

# FIG. 14

EP 4 475 455 A1

# FIG. 15

# FIG. 16

16-05    16-00

| UE processor | UE receiver |

16-10

UE transmitter

FIG. 17

**17-05**
Base station processor

**17-00**
Base station receiver

**17-10**
Base station transmitter

<table>
<tr><td colspan="2"><b>INTERNATIONAL SEARCH REPORT</b></td><td colspan="2">International application No.<br><b>PCT/KR2023/003148</b></td></tr>
</table>

**A.  CLASSIFICATION OF SUBJECT MATTER**

**H04B 7/155**(2006.01)i; **H04B 7/06**(2006.01)i; **H04B 7/08**(2006.01)i; **H04L 5/00**(2006.01)i

According to International Patent Classification (IPC) or to both national classification and IPC

**B.  FIELDS SEARCHED**

Minimum documentation searched (classification system followed by classification symbols)

H04B 7/155(2006.01); H01Q 21/30(2006.01); H04B 1/18(2006.01); H04B 7/0408(2017.01); H04B 7/06(2006.01); H04L 5/00(2006.01); H04W 16/28(2009.01); H04W 74/00(2009.01); H04W 74/08(2009.01); H04W 76/11(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리피터(repeater), 기지국(base station), 제어 정보(control information), 빔(beam)

**C.  DOCUMENTS CONSIDERED TO BE RELEVANT**

| Category* | Citation of document, with indication, where appropriate, of the relevant passages | Relevant to claim No. |
|---|---|---|
| X | US 2021-0298069 A1 (QUALCOMM INCORPORATED) 23 September 2021 (2021-09-23)<br>See paragraphs [0087] and [0099]-[0106]; claim 1; and figure 6. | 1-6,8-15 |
| A | | 7 |
| X | US 2021-0044412 A1 (QUALCOMM INCORPORATED) 11 February 2021 (2021-02-11)<br>See paragraphs [0084]-[0089]; and claims 1-8. | 1,8,11,15 |
| X | US 2020-0280355 A1 (QUALCOMM INCORPORATED) 03 September 2020 (2020-09-03)<br>See paragraph [0113]; and claims 1-6. | 1,8,11,15 |
| A | US 2021-0126694 A1 (QUALCOMM INCORPORATED) 29 April 2021 (2021-04-29)<br>See paragraphs [0165]-[0228]; and figure 8. | 1-15 |
| A | KR 10-2022-0015389 A (QUALCOMM INCORPORATED) 08 February 2022 (2022-02-08)<br>See paragraphs [0175]-[0179]; and figure 13. | 1-15 |

☐ Further documents are listed in the continuation of Box C.   ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **08 June 2023** | **12 June 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## EP 4 475 455 A1

**INTERNATIONAL SEARCH REPORT**
Information on patent family members

International application No.

**PCT/KR2023/003148**

| Patent document cited in search report | | | Publication date (day/month/year) | Patent family member(s) | | | Publication date (day/month/year) |
|---|---|---|---|---|---|---|---|
| US | 2021-0298069 | A1 | 23 September 2021 | BR | 112022018375 | A2 | 08 November 2022 |
| | | | | CN | 114175521 | A | 11 March 2022 |
| | | | | CN | 115316031 | A | 08 November 2022 |
| | | | | EP | 4128970 | A1 | 08 February 2023 |
| | | | | KR | 10-2022-0157956 | A | 29 November 2022 |
| | | | | US | 2021-0036762 | A1 | 04 February 2021 |
| | | | | US | 2021-0185723 | A1 | 17 June 2021 |
| | | | | WO | 2021-022242 | A1 | 04 February 2021 |
| | | | | WO | 2021-194701 | A1 | 30 September 2021 |
| US | 2021-0044412 | A1 | 11 February 2021 | BR | 112022001343 | A2 | 22 March 2022 |
| | | | | CN | 114208096 | A | 18 March 2022 |
| | | | | EP | 4010999 | A1 | 15 June 2022 |
| | | | | JP | 2022-543800 | A | 14 October 2022 |
| | | | | KR | 10-2022-0042355 | A | 05 April 2022 |
| | | | | TW | 202123644 | A | 16 June 2021 |
| | | | | US | 11611421 | B2 | 21 March 2023 |
| | | | | WO | 2021-026561 | A1 | 11 February 2021 |
| US | 2020-0280355 | A1 | 03 September 2020 | CN | 113454927 | A | 28 September 2021 |
| | | | | EP | 3931978 | A1 | 05 January 2022 |
| | | | | WO | 2020-176321 | A1 | 03 September 2020 |
| US | 2021-0126694 | A1 | 29 April 2021 | CN | 114600380 | A | 07 June 2022 |
| | | | | EP | 4052378 | A1 | 07 September 2022 |
| | | | | WO | 2021-086477 | A1 | 06 May 2021 |
| KR | 10-2022-0015389 | A | 08 February 2022 | AU | 2020-283755 | A1 | 02 December 2021 |
| | | | | BR | 112021023391 | A2 | 04 January 2022 |
| | | | | CN | 113826336 | A | 21 December 2021 |
| | | | | EP | 3977638 | A1 | 06 April 2022 |
| | | | | JP | 2022-534946 | A | 04 August 2022 |
| | | | | SG | 11202111804 | PA | 30 December 2021 |
| | | | | TW | 202103461 | A | 16 January 2021 |
| | | | | US | 10608678 | B1 | 31 March 2020 |
| | | | | WO | 2020-243018 | A1 | 03 December 2020 |

Form PCT/ISA/210 (patent family annex) (July 2022)

56